# EUROPEAN PATENT APPLICATION

(11) **EP 4 191 987 A1**
(43) Date of publication of application: **07.06.2023**
(21) Application number: 21860014.6
(22) Date of filing: 27.07.2021
(51) Int. Cl.: H04M 1/725, G07F 11/00

(54) **CONTACTLESS OPERATION METHOD AND APPARATUS, SERVER, AND ELECTRONIC DEVICE**

(30) Priority: 31.08.2020 CN 202010899168
(71) Applicant: Petal Cloud Technology Co., Ltd., Dongguan, Guangdong 523799 (CN)
(72) Inventor: ZHOU, Feng, Shenzhen, Guangdong 518129 (CN); ZOU, Wenjin, Shenzhen, Guangdong 518129 (CN); QIN, Linhu, Shenzhen, Guangdong 518129 (CN); HU, Zifu, Shenzhen, Guangdong 518129 (CN)
(74) Representative: Pfenning, Meinig & Partner mbB
(86) International application number: PCT/CN2021/108556
(87) International publication number: WO 2022/042174

(57) **Abstract**

Embodiments of this application provide a contactless operation method and apparatus, a server, and an electronic device. In the contactless operation method, after obtaining an image of a to-be-operated device by using a target application, the electronic device may send the image of the to-be-operated device to a server corresponding to the target application. Then, the server may obtain an operation model of the to-be-operated device based on the image of the to-be-operated device, and the server sends the operation model of the to-be-operated device to the electronic device. Next, the electronic device may display a user operation interface corresponding to the operation model, and the user may perform an operation on the user operation interface. The electronic device sends an operation event corresponding to the second operation of the user to the server, and the server processes the operation event corresponding to the second operation, so that the user can operate the to-be-operated device without touching the to-be-operated device.

## Description

This application claims priority to Chinese Patent Application No. 202010899168.6, filed with the China National Intellectual Property Administration on August 31, 2020 and entitled "CONTACTLESS OPERATION METHOD AND APPARATUS, SERVER, AND ELECTRONIC DEVICE", which is incorporated herein by reference in its entirety.

### TECHNICAL FIELD

Embodiments of this application relate to the field of intelligent terminal technologies, and in particular, to a contactless operation method and apparatus, a server, and an electronic device.

### BACKGROUND

A vending machine (also referred to as an automatic vending machine) is a commonly used device for business automation, and is not limited by time and/or a location, to save labor and facilitate transactions.

Common vending machines are classified into two types in terms of operation: a conventional button vending machine and a large-screen vending machine. For the conventional button vending machine, a user usually selects a commodity by using a button, inserts a banknote or a coin for payment, then the button vending machine pops up the commodity, and the user takes out the commodity from the button vending machine. For the large-screen vending machine, a user usually selects a commodity on a large screen, inserts a banknote or a coin for payment or scans QR code on the large screen for electronic payment, then the large-screen vending machine pops up the commodity, and the user takes out the commodity from the large-screen vending machine.

However, in a case in which an epidemic situation of an infectious disease occurs, when a user selects a commodity in a physical contact manner by using a physical button or a screen touch control of the vending machine, there is a risk that a virus is spread through a physical medium.

In addition, the vending machine has a problem that a physical button is damaged or does not work, or an operation on a screen is insensitive in a rainy day, to affect user experience.

### SUMMARY

Embodiments of this application provide a contactless operation method and apparatus, a server, and an electronic device. Embodiments of this application further provide a computer-readable storage medium, so that a user can operate a to-be-operated device without touching the to-be-operated device.

According to a first aspect, an embodiment of this application provides a contactless operation method. The method includes: An electronic device detects a first operation performed by a user on a target application on the electronic device; and the electronic device obtains an image of a to-be-operated device by using the target application in response to the first operation. Then, the electronic device sends the image of the to-be-operated device to a server corresponding to the target application.

The server obtains an operation model of the to-be-operated device based on the image of the to-be-operated device, and sends the operation model of the to-be-operated device to the electronic device.

Next, the electronic device displays a user operation interface corresponding to the operation model. After detecting a second operation of the user on the user operation interface, the electronic device sends, in response to the second operation, an operation event corresponding to the second operation to the server. Finally, the server processes the operation event corresponding to the second operation.

According to the foregoing contactless operation method, the user can operate the to-be-operated device without touching the to-be-operated device, to avoid a risk of spreading a virus through a physical medium. When a physical button of the to-be-operated device is damaged or does not work, or an operation is insensitive, the user can operate the to-be-operated device on an electronic device used by the user, and a plurality of users can simultaneously operate the to-be-operated device when the user operates the to-be-operated device on the electronic device used by the user, so that user experience is improved.

In a possible implementation, that the server obtains an operation model of the to-be-operated device based on the image of the to-be-operated device may be: The server obtains a device identifier of the to-be-operated device based on the image of the to-be-operated device, and obtains the operation model of the to-be-operated device based on the device identifier of the to-be-operated device.

In a possible implementation, the image of the to-be-operated device may include electronic information code of the to-be-operated device; and that the server obtains a device identifier of the to-be-operated device based on the image of the to-be-operated device may be: The server identifies the electronic information code of the to-be-operated device included in the image, to obtain the device identifier of the to-be-operated device.

In a possible implementation, after the electronic device used by the user detects the first operation performed by the user on the target application, the electronic device may further obtain location information of the electronic device, and send the location information of the electronic device to the server corresponding to the target application.

In a possible implementation, that the server obtains a device identifier of the to-be-operated device based on the image of the to-be-operated device may be: The server identifies, based on the location information of the electronic device, the to-be-operated device included in the image of the to-be-operated device, and then obtains the device identifier of the to-be-operated device based on an identification result of the to-be-operated device.

According to a second aspect, an embodiment of this application provides a contactless operation method. The method includes: An electronic device detects a first operation performed by a user on a target application on the electronic device; and the electronic device obtains an image of a to-be-operated device by using the target application in response to the first operation. Then, the electronic device sends the image of the to-be-operated device to a server corresponding to the target application, and receives an operation model of the to-be-operated device that is sent by the server, where the operation model of the to-be-operated device is obtained by the server based on the image of the to-be-operated device.

Next, the electronic device displays a user operation interface corresponding to the operation model. After detecting a second operation of the user on the user operation interface, the electronic device sends, in response to the second operation, an operation event corresponding to the second operation to the server, so that the server processes the operation event corresponding to the second operation.

According to the foregoing contactless operation method, the user can operate the to-be-operated device without touching the to-be-operated device, to avoid a risk of spreading a virus through a physical medium. When a physical button of the to-be-operated device is damaged or does not work, or an operation is insensitive, the user may operate the to-be-operated device on an electronic device used by the user, and a plurality of users can simultaneously operate the to-be-operated device when the user operates the to-be-operated device on the electronic device used by the user, so that user experience is improved.

In a possible implementation, that the electronic device obtains an image of a to-be-operated device by using the target application may be: The electronic device invokes a camera in the electronic device by using the target application to photograph the to-be-operated device, to obtain the image of the to-be-operated device; or the electronic device invokes a camera in the electronic device by using the target application to scan the to-be-operated device, to obtain an image visual sparse point cloud of the to-be-operated device.

In a possible implementation, after the electronic device detects the first operation performed by the user on the target application on the electronic device, the electronic device may further obtain location information of the electronic device, and then send the location information of the electronic device to the server corresponding to the target application, so that the server identifies the to-be-operated device included in the image of the to-be-operated device, and obtains the operation model of the to-be-operated device based on an identification result of the to-be-operated device and the location information of the electronic device.

In a possible implementation, before receiving the operation model of the to-be-operated device that is sent by the server, the electronic device may further receive device identifiers of at least two to-be-operated devices that are sent by the server, and display the device identifiers of the at least two to-be-operated devices. Then, the electronic device may obtain a device identifier selected by the user, and send, to the server, the device identifier selected by the user. In this way, the receiving an operation model of the to-be-operated device that is sent by the server may be: receiving an operation model that corresponds to the device identifier selected by the user and that is sent by the server.

In a possible implementation, the to-be-operated device may be a vending machine; and before displaying a user operation interface corresponding to the operation model, the electronic device may further receive inventory information of the vending machine that is sent by the server. In this way, the displaying a user operation interface corresponding to the operation model may be: The electronic device displays the user operation interface corresponding to the operation model, where the user operation interface includes the inventory information of the vending machine.

In a possible implementation, the detecting a second operation of the user on the user operation interface may be: detecting the second operation of the user for selecting and purchasing a commodity on the user operation interface; and the sending, in response to the second operation, an operation event corresponding to the second operation to the server may be: The electronic device submits, to the server in response to the second operation, an order of the user for purchasing the selected commodity, where the order includes information about a payment channel selected by the user.

According to a third aspect, an embodiment of this application provides a contactless operation method. The method includes: A server receives an image of a to-be-operated device that is sent by an electronic device, where the server is a server corresponding to a target application, and the image of the to-be-operated device is obtained by using the target application after the electronic device detects a first operation performed by a user using the electronic device on the target application. Then, the server obtains an operation model of the to-be-operated device based on the image of the to-be-operated device, and sends the operation model of the to-be-operated device to the electronic device, so that the electronic device displays a user operation interface corresponding to the operation model.

Next, the server receives an operation event that corresponds to a second operation and that is sent by the electronic device, where the operation event corresponding to the second operation is sent by the electronic device after the electronic device detects the second operation of the user on the user operation interface. Finally, the server processes the operation event corresponding to the second operation.

According to the foregoing contactless operation method, the user can operate the to-be-operated device without touching the to-be-operated device, to avoid a risk of spreading a virus through a physical medium. When a physical button of the to-be-operated device is damaged or does not work, or an operation is insensitive, the user may operate the to-be-operated device on an electronic device used by the user, and a plurality of users can simultaneously operate the to-be-operated device when the user operates the to-be-operated device on the electronic device used by the user, so that user experience is improved.

In a possible implementation, the obtaining an operation model of the to-be-operated device based on the image of the to-be-operated device may be: obtaining a device identifier of the to-be-operated device based on the image of the to-be-operated device, and obtaining the operation model of the to-be-operated device based on the device identifier of the to-be-operated device.

In a possible implementation, the image of the to-be-operated device includes electronic information code of the to-be-operated device; and the obtaining a device identifier of the to-be-operated device based on the image of the to-be-operated device may be: The server identifies the electronic information code of the to-be-operated device included in the image, to obtain the device identifier of the to-be-operated device.

In a possible implementation, before obtaining the device identifier of the to-be-operated device based on the image of the to-be-operated device, the server may further receive location information of the electronic device that is sent by the electronic device; and the obtaining a device identifier of the to-be-operated device based on the image of the to-be-operated device may be: The server identifies, based on the location information of the electronic device, the to-be-operated device included in the image of the to-be-operated device, and obtains the device identifier of the to-be-operated device based on an identification result of the to-be-operated device.

In a possible implementation, the identifying, based on the location information of the electronic device, the to-be-operated device included in the image of the to-be-operated device may be: The server obtains, based on the location information of the electronic device and from pre-stored deployment data of the to-be-operated device, an image model, a model number, and an operator that are of the to-be-operated device deployed at a current location of the electronic device, and compares the image of the to-be-operated device with the image model, to obtain a model number of the to-be-operated device included in the image and an operator to which the to-be-operated device belongs. That the server obtains the device identifier of the to-be-operated device based on an identification result of the to-be-operated device may be: obtaining the device identifier of the to-be-operated device from the deployment data based on the model number and the operator to which the to-be-operated device belongs.

In a possible implementation, after the identifying, based on the location information of the electronic device, the to-be-operated device included in the image of the to-be-operated device, if at least two to-be-operated devices of a same model number are identified at the current location of the electronic device, the server may further obtain device identifiers of the at least two to-be-operated devices based on the model numbers of the at least two to-be-operated devices and operators to which the at least two to-be-operated devices belong, and send the device identifiers of the at least two to-be-operated devices to the electronic device, so that the electronic device displays the device identifiers of the at least two to-be-operated devices to the user. Then, the server receives a device identifier of a to-be-operated device that is selected by the user and that is sent by the electronic device, and sends, to the electronic device, an operation model corresponding to the device identifier selected by the user.

In a possible implementation, the to-be-operated device may be a vending machine, and the identifying the to-be-operated device included in the image of the to-be-operated device may be: The server determines a commodity placement area of the vending machine from the image, and crops an image of the commodity placement area from the image, or reduces a recognition weight of an image of the commodity placement area.

In a possible implementation, before receiving the operation event that corresponds to the second operation and that is sent by the electronic device, the server may further obtain inventory information of the vending machine, and send the inventory information of the vending machine to the electronic device.

In a possible implementation, that the server obtains inventory information of the vending machine may be: obtaining the inventory information of the vending machine from a local database based on a device identifier of the vending machine; or obtaining, based on a device identifier of the vending machine, the inventory information of the vending machine from a server corresponding to the vending machine.

According to a fourth aspect, an embodiment of this application provides a contactless operation apparatus. The apparatus is included in an electronic device, and the apparatus has a function of implementing behavior of the electronic device in the second aspect and the possible implementations of the second aspect. The function may be implemented by hardware, or may be implemented by executing corresponding software by hardware. The hardware or the software includes one or more modules or units corresponding to the foregoing function, for example, a receiving module or unit, a processing module or unit, and a sending module or unit.

According to a fifth aspect, an embodiment of this application provides a contactless operation apparatus. The apparatus is included in a server, and the apparatus has a function of implementing behavior of the server in the third aspect and the possible implementations of the third aspect. The function may be implemented by hardware, or may be implemented by executing corresponding software by hardware. The hardware or the software includes one or more modules or units corresponding to the foregoing function, for example, a receiving module or unit, a processing module or unit, and a sending module or unit.

According to a sixth aspect, an embodiment of this application provides an electronic device. The electronic device includes: one or more processors, a memory, a plurality of applications, and one or more computer programs. The one or more computer programs are stored in the memory, and the one or more computer programs include instructions. When the instructions are executed by the electronic device, the electronic device is enabled to perform the following steps: detecting a first operation of a user on a target application on the electronic device; obtaining an image of a to-be-operated device by using the target application in response to the first operation; sending the image of the to-be-operated device to a server corresponding to the target application; receiving an operation model of the to-be-operated device that is sent by the server, where the operation model of the to-be-operated device is obtained by the server based on the image of the to-be-operated device; displaying a user operation interface corresponding to the operation model; and after detecting a second operation performed by the user on the operation model, sending, in response to the second operation, an operation event corresponding to the second operation to the server, so that the server processes the operation event corresponding to the second operation.

In a possible implementation, when the instructions are executed by the electronic device, that the electronic device is enabled to perform the step of obtaining an image of a to-be-operated device by using the target application may be: invoking a camera in the electronic device by using the target application to photograph the to-be-operated device, to obtain the image of the to-be-operated device; or invoking a camera in the electronic device by using the target application to scan the to-be-operated device, to obtain an image visual sparse point cloud of the to-be-operated device.

In a possible implementation, when the instructions are executed by the electronic device, after performing the step in which the electronic device used by a user detects a first operation performed by the user on a target application on the electronic device, the electronic device is further enabled to perform the following steps: obtaining location information of the electronic device; and sending the location information of the electronic device to the server corresponding to the target application, so that the server identifies the to-be-operated device included in the image of the to-be-operated device, and obtains the operation model of the to-be-operated device based on an identification result of the to-be-operated device and the location information of the electronic device.

In a possible implementation, when the instructions are executed by the electronic device, before performing the step of receiving an operation model of the to-be-operated device that is sent by the server, the electronic device is further enabled to perform the following steps: receiving device identifiers of the at least two to-be-operated devices that is sent by the server; displaying the device identifiers of the at least two to-be-operated devices; obtaining a device identifier of a to-be-operated device that is selected by the user; sending, to the server, the device identifier of the to-be-operated device that is selected by the user; and when the instructions are executed by the electronic device, that the electronic device is enabled to perform the step of receiving an operation model of the to-be-operated device that is sent by the server may be: receiving an operation model that corresponds to the device identifier selected by the user and that is sent by the server.

In a possible implementation, the to-be-operated device includes a vending machine; and when the instructions are executed by the electronic device, before performing the step of displaying a user operation interface corresponding to the operation model, the electronic device is further enabled to perform the following steps: receiving inventory information of the vending machine that is sent by the server; and that the electronic device performs the step of displaying a user operation interface corresponding to the operation model may be: displaying the user operation interface corresponding to the operation model, where the user operation interface includes the inventory information of the vending machine.

In a possible implementation, when the instructions are executed by the electronic device, that the electronic device performs the step of detecting a second operation of the user on the user operation interface may be: detecting the second operation of the user for selecting and purchasing a commodity on the user operation interface; and that the electronic device performs the step of sending, in response to the second operation, an operation event corresponding to the second operation to the server may be: submitting, to the server in response to the second operation, an order of the user for purchasing the selected commodity, where the order includes information about a payment channel selected by the user.

According to a seventh aspect, an embodiment of this application provides a server. The server includes: one or more processors, a memory, a plurality of applications, and one or more computer programs. The one or more computer programs are stored in the memory, and the one or more computer programs include instructions. When the instructions are executed by the server, the server is enabled to perform the following steps: receiving an image of a to-be-operated device that is sent by an electronic device, where the server is a server corresponding to a target application, and the image of the to-be-operated device is obtained by using the target application after the electronic device detects a first operation performed by a user using the electronic device on the target application; obtaining an operation model of the to-be-operated device based on the image of the to-be-operated device; sending he operation model of the to-be-operated device to the electronic device, so that the electronic device displays a user operation interface corresponding to the operation model; receiving an operation event that corresponds to a second operation and that is sent by the electronic device, where the operation event corresponding to the second operation is sent by the electronic device after the electronic device detects the second operation of the user on the user operation interface; and processing the operation event corresponding to the second operation.

In a possible implementation, when the instructions are executed by the electronic device, that the server is enabled to perform the step of obtaining an operation model of the to-be-operated device based on the image of the to-be-operated device may be: obtaining a device identifier of the to-be-operated device based on the image of the to-be-operated device, and obtaining the operation model of the to-be-operated device based on the device identifier of the to-be-operated device.

In a possible implementation, the image of the to-be-operated device includes electronic information code of the to-be-operated device; and when the instructions are executed by the electronic device, that the server is enabled to perform the step of obtaining a device identifier of the to-be-operated device based on the image of the to-be-operated device may be: identifying the electronic information code of the to-be-operated device included in the image, to obtain the device identifier of the to-be-operated device.

In a possible implementation, when the instructions are executed by the electronic device, before performing the step of obtaining a device identifier of the to-be-operated device based on the image of the to-be-operated device, the server is further enabled to perform the following steps: receiving location information of the electronic device that is sent by the electronic device; and that the server performs the step of obtaining a device identifier of the to-be-operated device based on the image of the to-be-operated device may be: identifying, based on the location information of the electronic device, the to-be-operated device included in the image of the to-be-operated device; and obtaining the device identifier of the to-be-operated device based on an identification result of the to-be-operated device.

In a possible implementation, when the instructions are executed by the server, that the server is enabled to perform the step of identifying, based on the location information of the electronic device, the to-be-operated device included in the image of the to-be-operated device may be: obtaining, based on the location information of the electronic device and from pre-stored deployment data of the to-be-operated device, an image model, a model number, and an operator that are of the to-be-operated device and deployed at a current location of the electronic device; comparing the image of the to-be-operated device with the image model, to obtain a model number of the to-be-operated device included in the image and an operator to which the to-be-operated device belongs; and that the server performs the step of obtaining the device identifier of the to-be-operated device based on an identification result of the to-be-operated device may be: obtaining the device identifier of the to-be-operated device from the deployment data based on the model number and the operator to which the to-be-operated device belongs.

In a possible implementation, when the instructions are executed by the server, after performing the step of identifying, based on the location information of the electronic device, the to-be-operated device included in the image of the to-be-operated device, the server is further enabled to perform the following steps: if at least two to-be-operated devices of a same model number are identified at the current location of the electronic device, obtaining device identifiers of the at least two to-be-operated devices based on the model numbers of the at least two to-be-operated devices and operators to which the at least two to-be-operated devices belong; sending the device identifiers of the at least two to-be-operated devices to the electronic device, so that the electronic device displays the device identifiers of the at least two to-be-operated devices to the user; receiving a device identifier of a to-be-operated device that is selected by the user and that is sent by the electronic device; and sending, to the electronic device, an operation model corresponding to the device identifier selected by the user.

In a possible implementation, the to-be-operated device may include a vending machine, and when the instructions are executed by the server, that the server is enabled to perform the step of identifying the to-be-operated device included in the image of the to-be-operated device may be: determining a commodity placement area of the vending machine from the image; and cropping an image of the commodity placement area from the image; or reducing a recognition weight of an image of the commodity placement area.

In a possible implementation, when the instructions are executed by the server, before performing the step of receiving an operation event that corresponds to a second operation and that is sent by the electronic device, the server is further enabled to perform the following steps: obtaining inventory information of the vending machine; and sending the inventory information of the vending machine to the electronic device.

In a possible implementation, when the instructions are executed by the server, that the server performs the step of obtaining inventory information of the vending machine may be: obtaining the inventory information of the vending machine from a local database based on a device identifier of the vending machine; or obtaining, based on a device identifier of the vending machine, the inventory information of the vending machine from a server corresponding to the vending machine.

It should be understood that the technical solutions in the fourth aspect and the sixth aspect of this application are consistent with the technical solution in the second aspect of this application. Beneficial effects achieved in the aspects and the corresponding feasible implementations are similar. Details are not described again.

It should be understood that the technical solutions in the fifth aspect and the seventh aspect of this application are consistent with the technical solution in the third aspect of this application. Beneficial effects achieved in the aspects and the corresponding feasible implementations are similar. Details are not described again.

According to an eighth aspect, this application provides a computer-readable storage medium. The computer-readable storage medium stores a computer program, and when the computer program is run on a computer, the computer is enabled to perform the method according to the second aspect.

According to a ninth aspect, this application provides a computer-readable storage medium. The computer-readable storage medium stores a computer program, and when the computer program is run on a computer, the computer is enabled to perform the method according to the third aspect.

According to a tenth aspect, this application provides a computer program. When the computer program is executed by a computer, the computer program is used to perform the method according to the second aspect.

According to an eleventh aspect, this application provides a computer program. When the computer program is executed by a computer, the computer program is used to perform the method according to the second aspect.

In a possible design, the programs in the tenth aspect and the eleventh aspect may be all or partially stored in a storage medium that is encapsulated with a processor, or may be all or partially stored in a memory that is not encapsulated with a processor.

### BRIEF DESCRIPTION OF DRAWINGS

FIG. 1 is a schematic diagram of a structure of an electronic device according to an embodiment of this application;
FIG. 2 is a block diagram of a software structure of an electronic device 100 according to an embodiment of this application;
FIG. 3 is a schematic diagram of a structure of a server according to an embodiment of this application;
FIG. 4 is a schematic diagram of an application scenario according to an embodiment of this application;
FIG. 5A and FIG. 5B are a flowchart of a contactless operation method according to an embodiment of this application;
FIG. 6 is a schematic diagram of an AR scanning interface according to an embodiment of this application;
FIG. 7(a) is a schematic diagram of a user operation interface of a 2D model according to an embodiment of this application;
FIG. 7(b) is a schematic diagram of a user operation interface of a 3D model according to another embodiment of this application;
FIG. 8 is a schematic diagram of an application scenario according to another embodiment of this application;
FIG. 9A and FIG. 9B are a flowchart of a contactless operation method according to another embodiment of this application;
FIG. 10 is a schematic diagram of an application scenario according to still another embodiment of this application;
FIG. 11 is a flowchart of a contactless operation method according to still another embodiment of this application;
FIG. 12(a) and FIG. 12(b) each are a schematic diagram of a user operation interface of a smart express cabinet according to an embodiment of this application;
FIG. 13 is a schematic diagram of an application scenario according to still another embodiment of this application;
FIG. 14 is a flowchart of a contactless operation method according to still another embodiment of this application;
FIG. 15(a) and FIG. 15(b) each are a schematic diagram of a user operation interface of an elevator according to an embodiment of this application;
FIG. 16 is a flowchart of a contactless operation method according to still another embodiment of this application;
FIG. 17 is a flowchart of a contactless operation method according to still another embodiment of this application;
FIG. 18 is a flowchart of a contactless operation method according to still another embodiment of this application;
FIG. 19 is a flowchart of a contactless operation method according to still another embodiment of this application;
FIG. 20 is a flowchart of a contactless operation method according to still another embodiment of this application;
FIG. 21 is a flowchart of a contactless operation method according to still another embodiment of this application;
FIG. 22 is a flowchart of a contactless operation method according to still another embodiment of this application;
FIG. 23 is a schematic diagram of a structure of an electronic device according to another embodiment of this application; and
FIG. 24 is a schematic diagram of a structure of a server according to another embodiment of this application.

### DESCRIPTION OF EMBODIMENTS

Terms used in embodiments of this application are only used to explain specific embodiments of this application, but are not intended to limit this application.

A vending machine (also referred to as an automatic vending machine) is a commonly used device for business automation, and is not limited by time and/or a location, to save labor and facilitate transactions. However, in a case in which an epidemic situation of an infectious disease occurs, when a user selects a commodity in a physical contact manner by using a physical button or a screen touch control of the vending machine, there is a risk that a virus is spread through a physical medium. In addition, the vending machine has a problem that a physical button is damaged or does not work, or an operation on a screen is insensitive in a rainy day, to affect user experience.

Based on the foregoing problems, embodiments of this application provide a contactless operation method, so that the user can implement contactless shopping when using a vending machine.

The contactless operation method provided in embodiments of this application may be applied to an electronic device. The electronic device may be a smartphone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, a personal digital assistant (personal digital assistant, PDA), or the like. A specific type of the electronic device is not limited in embodiments of this application. The following describes a structure of the electronic device by using an example in which the electronic device is a smartphone.

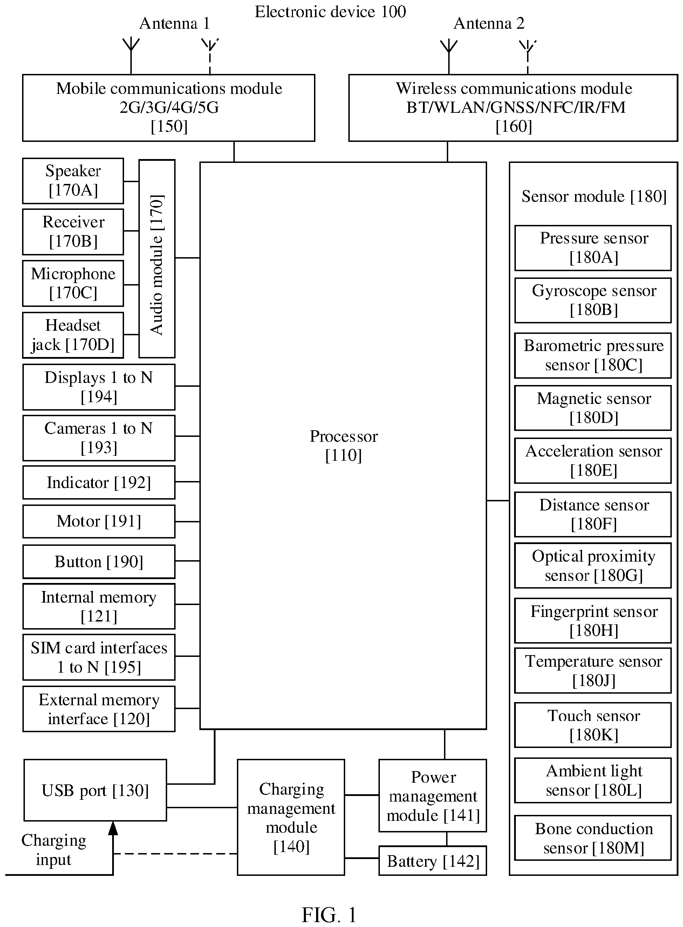

For example, FIG. 1 is a schematic diagram of a structure of an electronic device according to an embodiment of this application. As shown in FIG. 1, the electronic device 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may generate an operation control signal based on instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

It may be understood that an interface connection relationship between the modules illustrated in this embodiment of this application is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

A wireless communication function of the electronic device 100 may be implemented through the antenna 1, the antenna 2, the mobile communications module 150, the wireless communications module 160, the modem processor, the baseband processor, and the like.

The antenna 1 and the antenna 2 are configured to transmit and receive an electromagnetic wave signal. Each antenna in the electronic device 100 may be configured to cover one or more communications frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communications module 150 can provide a solution, applied to the electronic device 100, to wireless communication including 2G/3G/4G/5G, or the like. The mobile communications module 150 may include at least one filter, a switch, a power amplifier, a low noise amplifier (low noise amplifier, LNA), and the like. The mobile communications module 150 may receive an electromagnetic wave through the antenna 1, perform processing such as filtering or amplification on the received electromagnetic wave, and transmit the electromagnetic wave to the modem processor for demodulation. The mobile communications module 150 may further amplify a signal modulated by the modem processor, and convert the signal into an electromagnetic wave for radiation through the antenna 1. In some embodiments, at least some functional modules in the mobile communications module 150 may be disposed in the processor 110. In some embodiments, at least some functional modules of the mobile communications module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communications module 150 or another functional module.

The wireless communications module 160 may provide a solution, applied to the electronic device 100, to wireless communication including a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communications module 160 may be one or more components integrating at least one communications processor module. The wireless communications module 160 receives an electromagnetic wave through the antenna 2, performs frequency modulation and filtering processing on an electromagnetic wave signal, and sends a processed signal to the processor 110. The wireless communications module 160 may further receive a to-be-sent signal from the processor 110, perform frequency modulation and amplification on the signal, and convert the signal into an electromagnetic wave for radiation through the antenna 2.

In some embodiments, in the electronic device 100, the antenna 1 and the mobile communications module 150 are coupled, and the antenna 2 and the wireless communications module 160 are coupled, so that the electronic device 100 can communicate with a network and another device by using a wireless communications technology. The wireless communications technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diodes, QLED), or the like. In some embodiments, the electronic device 100 may include one or N displays 194, where N is a positive integer greater than 1.

The electronic device 100 may implement a photographing function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV In some embodiments, the electronic device 100 may include one or N cameras 193, where N is a positive integer greater than 1.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play back or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the electronic device 100 may be implemented through the NPU, for example, image recognition, facial recognition, speech recognition, and text understanding.

The external memory interface 120 may be used to connect to an external memory card, for example, a micro SD card, to extend a storage capability of the electronic device 100. The external memory card communicates with the processor 110 through the external memory interface 120, to implement a data storage function. For example, files such as music and videos are stored in the external memory card.

The internal memory 121 may be configured to store computer-executable program code. The executable program code includes instructions. The internal memory 121 may include a program storage area and a data storage area. The program storage area may store an operating system, an application required by at least one function (for example, a voice playing function or an image playing function), and the like. The data storage area may store data (such as audio data and an address book) created during use of the electronic device 100, and the like. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications and data processing of the electronic device 100.

The electronic device 100 may implement an audio function, for example, music playing and recording, through the audio module 170, the speaker 170A, the receiver 170B, the microphone 170C, the headset jack 170D, the application processor, and the like.

A software system of the electronic device 100 may use a layered architecture, an event-driven architecture, a microkernel architecture, a micro service architecture, or a cloud architecture. In embodiments of this application, an Android system with a layered architecture is used as an example to describe a software structure of the electronic device 100.

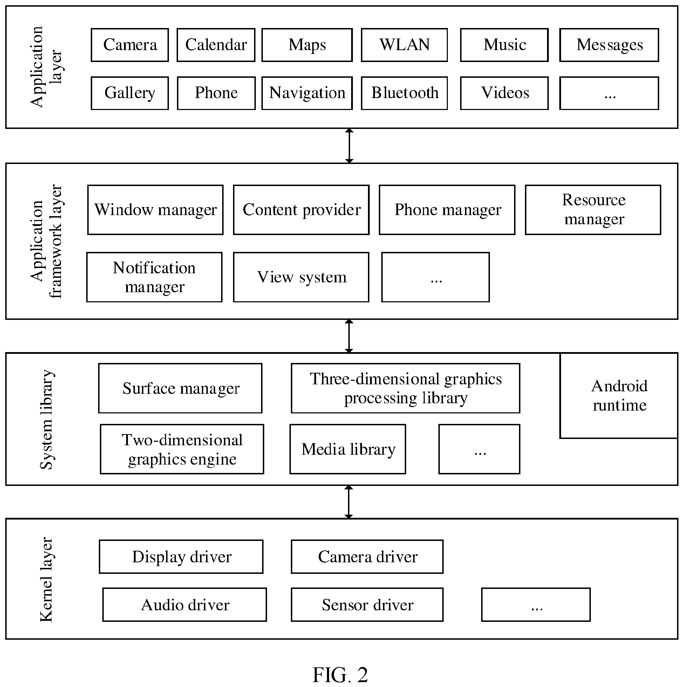

FIG. 2 is a block diagram of a software structure of an electronic device 100 according to an embodiment of this application.

In a layered architecture, software is divided into several layers, and each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages.

As shown in FIG. 2, the application packages may include applications such as Camera, Gallery, Calendar, Phone, Maps, Navigation, WLAN, Bluetooth, Music, Videos, and Messages.

The application framework layer provides an application programming interface (application programming interface, API) and a programming framework for an application at the application layer. The application framework layer includes some predefined functions.

As shown in FIG. 2, the application framework layer may include a window manager, a content provider, a view system, a phone manager, a resource manager, a notification manager, and the like.

The Android runtime includes a kernel library and a virtual machine. The Android runtime is responsible for scheduling and management of the Android system.

The system library may include a plurality of functional modules, for example, a surface manager (surface manager), a media library (media libraries), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playback and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

In addition, implementation of the contactless operation method provided in embodiments of this application not only relates to an electronic device side, but also relates to a server side. The server may be a cloud server or a common physical server. A specific type of the server is not limited in embodiments of this application.

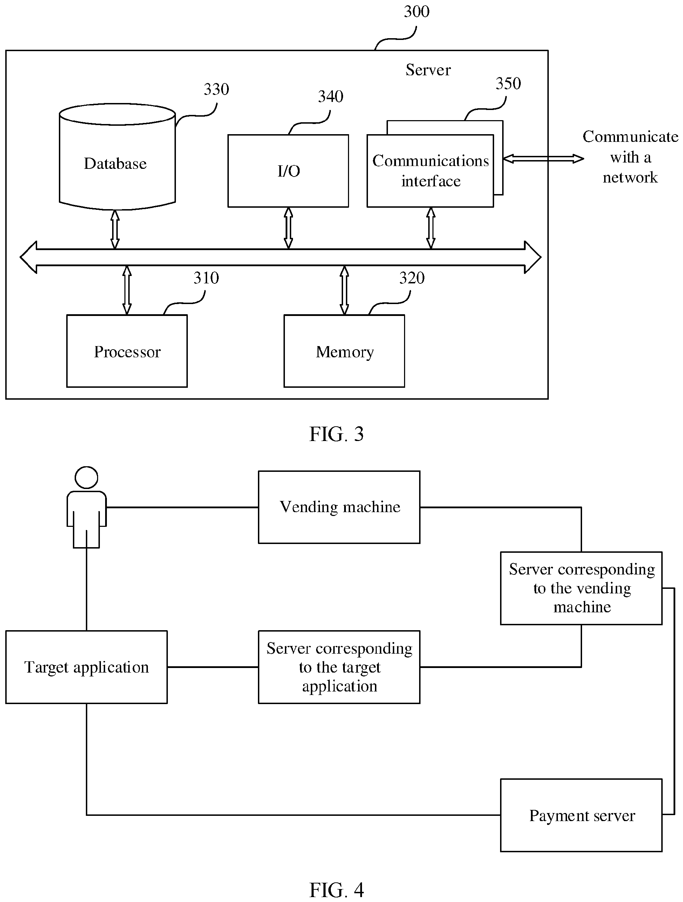

For example, FIG. 3 is a schematic diagram of a structure of a server according to an embodiment of this application. As shown in FIG. 3, the server 300 may include a processor 310, a memory 320, a database 330, an I/O 340, and a communications interface 350. The memory 320 may include a read-only memory (read-only memory, ROM) and a random access memory (random access memory, RAM).

The processor 310, the memory 320, the database 330, the I/O 340, and the communications interface 350 may communicate with each other by using an internal connection path, to transfer a control signal and/or a data signal. The memory 320 is configured to store a computer program. The processor 310 is configured to invoke the computer program from the memory 320 and run the computer program.

The processor 310 and the memory 320 may be combined into one processing apparatus, and are more commonly components independent of each other. The processor 310 is configured to execute program code stored in the memory 320. During specific implementation, the memory 320 may alternatively be integrated into the processor 310, or independent of the processor 310.

It should be understood that the processor 310 in the server 300 shown in FIG. 3 may include a central processing unit (central processing unit, CPU), and may further include another type of processor, for example, a graphics processing unit (graphics processing unit, GPU).

For ease of understanding, in the following embodiments of this application, the electronic device having the structures shown in FIG. 1 and FIG. 2 and the server having the structure shown in FIG. 3 are used as an example to describe in detail the contactless operation method provided in embodiments of this application with reference to the accompanying drawings and application scenarios.

FIG. 4 is a schematic diagram of an application scenario according to an embodiment of this application. The application scenario shown in FIG. 4 includes a user, a vending machine, a server corresponding to the vending machine, a target application, a server corresponding to the target application, and a payment server.

The user uses the target application to scan the vending machine or takes a photo of the vending machine.

The vending machine synchronizes inventory information of a commodity to the server corresponding to the vending machine when there is a replenishment behavior and/or a shipment behavior.

The server corresponding to the vending machine may be a cloud server. The server records inventory information of a vending machine, and can deliver an instruction to control shipment of the vending machine after a user completes payment.

The target application is an application (application, APP) in which a user performs an operation such as scanning, photographing, commodity selecting and purchasing and/or payment on an electronic device such as a smartphone. In this application scenario, the target application may be a general-purpose APP having a photographing or scanning function, for example, an augmented reality engine application (augmented reality engine application, AR Engine APP), or a Scan applet. In this scenario, the electronic device may be the electronic device 100 having the structures shown in FIG. 1 and FIG. 2.

The server corresponding to the target application is a cloud that provides a business service for the target application. For example, the target application is an AR Engine APP. The server corresponding to the target application may be an AR server, and the AR server may also be a cloud server.

The payment server is a server that allows a user to pay bills. The target application usually integrates a payment software development kit (software development kit, SDK) or uses a web page (web) for payment.

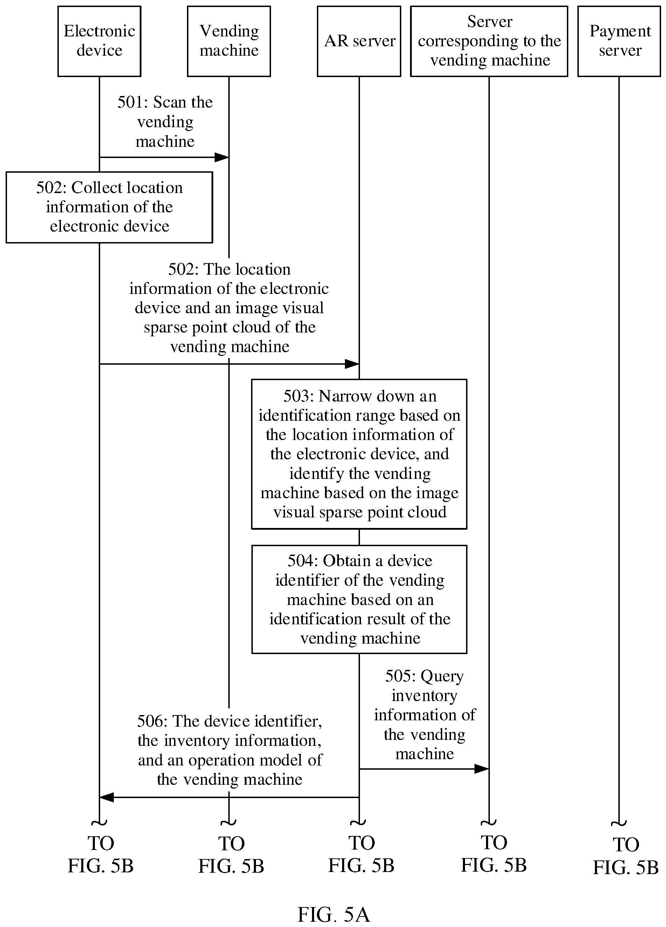

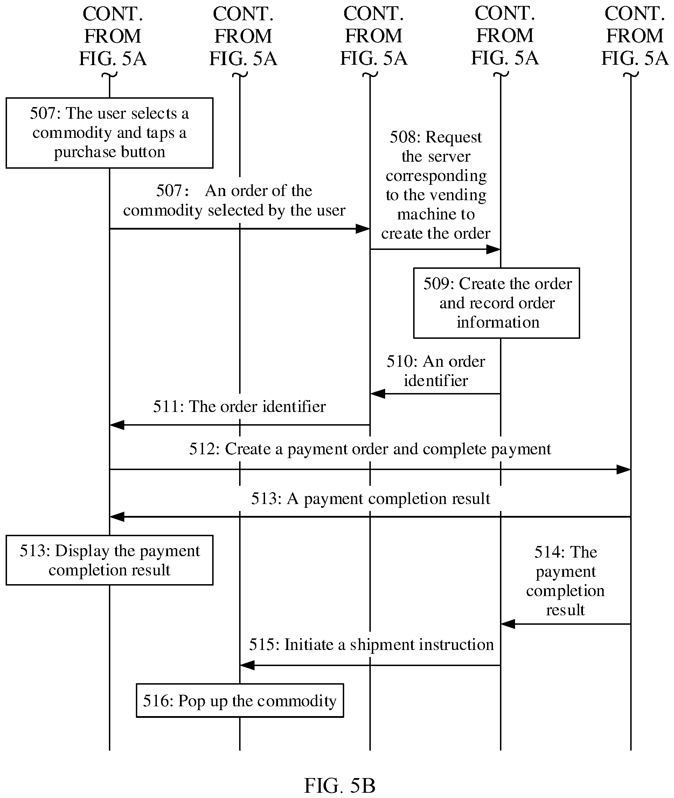

FIG. 5A and FIG. 5B are a flowchart of a contactless operation method according to an embodiment of this application. This embodiment describes the contactless operation method in the application scenario shown in FIG. 4. As shown in FIG. 5A and FIG. 5B, the contactless operation method may include the following steps.

Step 501: The electronic device 100 scans the vending machine by using an AR Engine APP, to obtain an image visual sparse point cloud of the vending machine.

In reverse engineering, a point data set of an appearance surface of an object that is obtained by using a measurement instrument is referred to as a point cloud. Generally, a quantity of points obtained by using a three-dimensional coordinate measuring machine is relatively small, and a spacing between points is relatively large. Therefore, the point cloud is referred to as a sparse point cloud. In this embodiment, the point cloud of the vending machine that is obtained by the electronic device 100 by scanning the vending machine by using the AR Engine APP is a sparse point cloud.

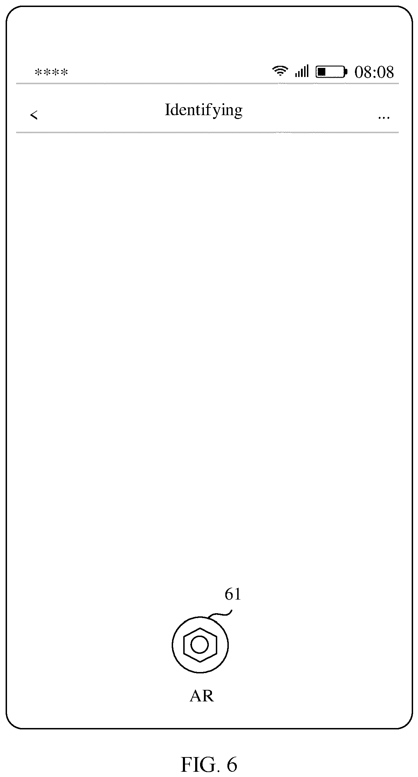

Specifically, an interface displayed after the AR Engine APP in the electronic device 100 is opened may be shown in FIG. 6. FIG. 6 is a schematic diagram of an AR scanning interface according to an embodiment of this application. The interface shown in FIG. 6 is the interface displayed by the AR Engine APP, and the interface includes an AR scanning icon 61. After the user taps the AR scanning icon 61, the AR Engine APP may invoke the camera 193 in the electronic device 100 to scan the vending machine, to obtain the image visual sparse point cloud of the vending machine.

Step 502: The electronic device 100 collects location information of the electronic device 100, and sends the location information of the electronic device 100 and the image visual sparse point cloud of the vending machine to the AR server.

Specifically, the electronic device 100 may obtain current location information of the electronic device 100 through a GPS sensor.

Step 503: The AR server narrows down an identification range based on the location information of the electronic device 100, and identifies the vending machine based on the image visual sparse point cloud.

In this embodiment, the AR server may be the server 300 having the structure shown in FIG. 3. When the structure shown in FIG. 3 is used for implementation, the database 330 in the AR server stores information about the vending machine. The information about the vending machine includes: an image visual sparse point cloud of the vending machine, a location of the vending machine, a device identifier of the vending machine, a model number of the vending machine, and an operator to which the vending machine belongs.

Specifically, the AR server may determine an identification range based on the location information of the electronic device 100, then obtain, from the database 330, an image visual sparse point cloud of the vending machine whose location is within the identification range, and match the image visual sparse point cloud sent by the electronic device 100 with the image visual sparse point cloud of the vending machine that is stored in the database 330, to complete identification for the vending machine.

Step 504: The AR server obtains a device identifier of the vending machine based on an identification result of the vending machine.

As described above, the AR server matches the image visual sparse point cloud sent by the electronic device 100 with the image visual sparse point cloud of the vending machine that is stored in the database 330. After obtaining an image visual sparse point cloud matched with the image visual sparse point cloud sent by the electronic device 100, the AR server may obtain, from the database 330, the device identifier of the vending machine that corresponds to the matched image visual sparse point cloud.

Step 505: The AR server may query, based on the device identifier of the vending machine, inventory information of the vending machine from the server corresponding to the vending machine.

Step 506: The AR server sends the device identifier, the inventory information, and an operation model (including a 2D model, a 3D model, or the like) of the vending machine to the electronic device 100.

Specifically, when the structure shown in FIG. 3 is used for implementation, the database 330 in the AR server may further store operation models of vending machines of a plurality of model numbers, and the plurality of model numbers of the vending machines may belong to a same operator or different operators. After obtaining the device identifier of the vending machine, the AR server may determine a model number of the vending machine based on the device identifier, to obtain an operation model of the vending machine of the model number.

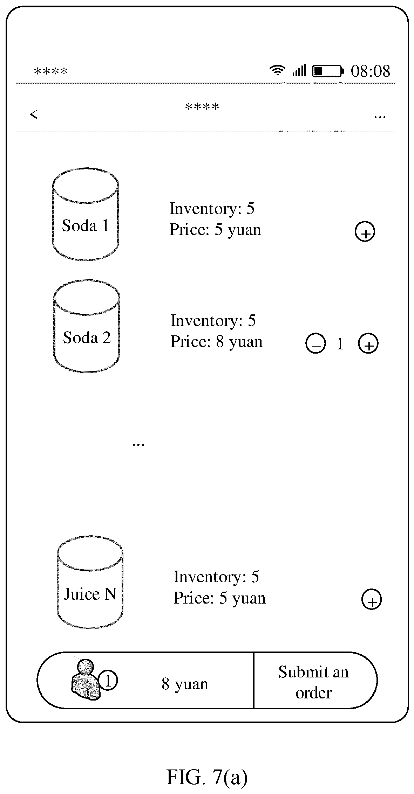

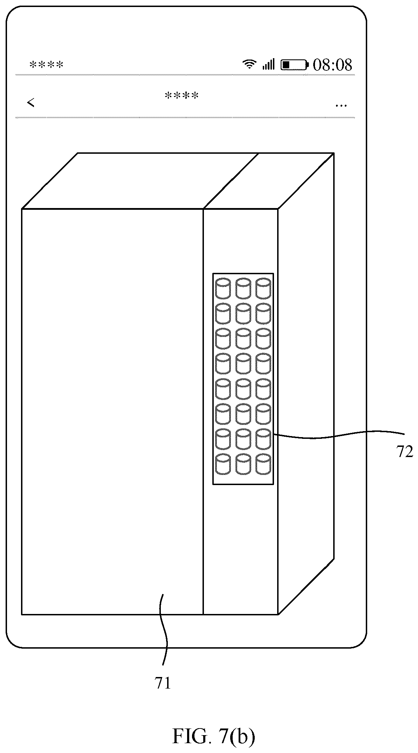

In this embodiment, the operation model sent by the AR server to the electronic device 100 may be data that constitutes the operation model. After the AR server sends the operation model of the vending machine to the electronic device 100, the electronic device 100 may display a user operation interface corresponding to the operation model of the vending machine. The user operation interface corresponding to the operation model may include a user operation interface of a 2D model and a user operation interface of a 3D model, which are respectively shown in FIG. 7(a) and FIG. 7(b). FIG. 7(a) is a schematic diagram of a user operation interface of a 2D model according to an embodiment of this application, and FIG. 7(b) is a schematic diagram of a user operation interface of a 3D model according to another embodiment of this application.

It can be learned from FIG. 7(a) that the user operation interface of the 2D model includes a picture, a price, and inventory information of a commodity that can be selected. It can be learned from FIG. 7(b) that the user operation interface of the 3D model includes a 3D model of a vending machine. FIG. 7(b) shows a 3D model of the large-screen vending machine by using a large-screen vending machine as an example. A menu for selecting a commodity on the user operation interface of the 3D model is consistent with a menu of a real large-screen vending machine. As shown in FIG. 7(b), an area marked with 71 is a commodity placement area of the large-screen vending machine, and an area marked with 72 is a display of the large-screen vending machine. A commodity menu of the large-screen vending machine is displayed in the area marked with 72, and the user may select a required commodity in the area marked with 72.

Step 507: After the user selects a commodity and taps a purchase button, the electronic device 100 sends, to the AR server, an order of the commodity selected by the user, where the order carries a payment channel selected by the user, for example, a bank card or a third-party payment platform.

For example, the user may select "Soda 2" on the interface shown in FIG. 7(a), and tap "Submit an order". Then, the electronic device 100 may send, to the AR server, an order of the "Soda 2" purchased by the user.

Step 508: The AR server requests the server corresponding to the vending machine to create the order.

Step 509: The server corresponding to the vending machine creates the order and records order information.

Specifically, when creating the order, the server corresponding to the vending machine signs the order by using a key issued by a payment channel.

Step 510: The server corresponding to the vending machine sends an order identifier to the AR server.

Step 511: The AR server sends the order identifier to the electronic device 100.

Step 512: The user selects a payment manner (for example, a credit card, a debit card, or a balance) for payment, and after obtaining a payment operation of the user, the electronic device 100 creates a payment order on a corresponding payment server (generally by using an SDK corresponding to a payment channel) and completes payment.

Step 513: The electronic device 100 receives a payment completion result sent by the payment server, and displays the payment completion result.

Step 514: The payment server notifies the server corresponding to the vending machine of the payment completion result.

The notification carries the order identifier.

Step 515: The server corresponding to the vending machine verifies that the order has been paid, and initiates a shipment instruction.

Step 516: The vending machine pops up the commodity.

According to the foregoing contactless operation method, physical contact between the user and the vending machine can be reduced, to reduce a risk of virus infection. For an existing vending machine, shopping can also be completed in a scenario in which a physical button or a large screen is damaged or does not work. In addition, manufacturing costs of the vending machine can be reduced. A button or a large screen may not be required, that is, for the vending machine, a component required for an information input operation is removed. If a plurality of users simultaneously purchase commodities on the vending machine, the users do not need to queue for commodity selecting and payment. Commodities purchased by different users can be distinguished by using sequence numbers of the commodities that are popped up. In some hot spots (for example, a scenic spot) or a scenario with limited time (during students' after-class), a user experience effect is excellent. In this embodiment, an AR Engine APP and a corresponding AR server constitute a general capability, so that a relatively large quantity of vending machine manufacturers can be aggregated. The vending machine manufacturer does not need to pay attention to specific implementation of a technology, and a use threshold for the vending machine manufacturer is low.

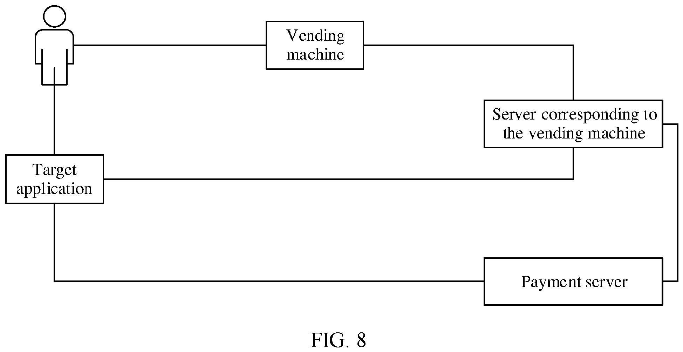

FIG. 8 is a schematic diagram of an application scenario according to another embodiment of this application. Compared with the scenario shown in FIG. 4, a difference lies in that, in the application scenario shown in FIG. 8, a target application is an APP operated by an operator of a vending machine, for example, a vending machine APP or a vending machine applet, and therefore a server corresponding to the target application is a server corresponding to the vending machine.

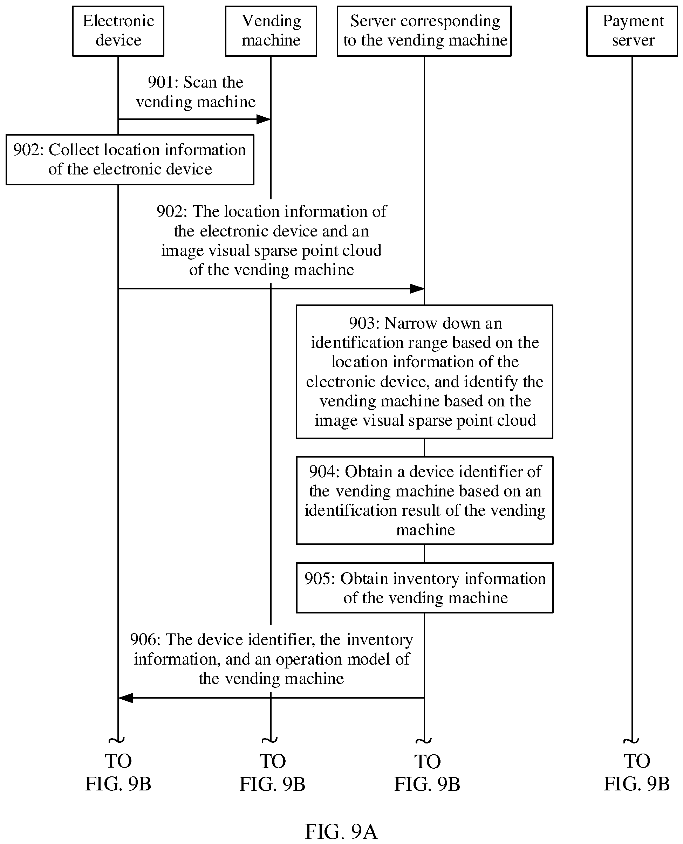

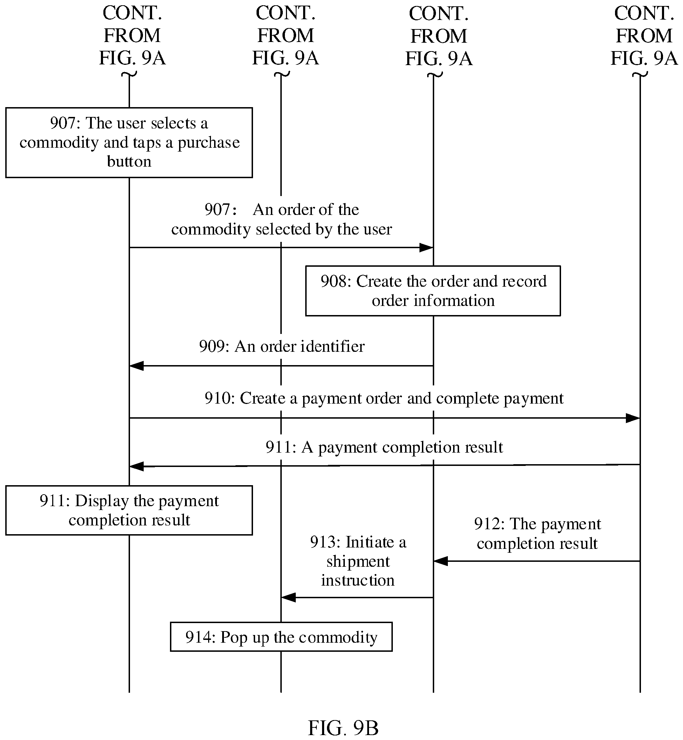

FIG. 9A and FIG. 9B are a flowchart of a contactless operation method according to another embodiment of this application. This embodiment describes the contactless operation method in the application scenario shown in FIG. 8. As shown in FIG. 9A and FIG. 9B, the contactless operation method may include the following steps.

Step 901: The electronic device 100 scans a vending machine by using a vending machine APP, to obtain an image visual sparse point cloud of the vending machine.

Specifically, an interface displayed after the vending machine APP in the electronic device 100 is opened may also be shown in FIG. 6. The interface includes an AR scanning icon 61. After the user taps the AR scanning icon 61, the vending machine APP may invoke the camera 193 in the electronic device 100 to scan the vending machine, to obtain the image visual sparse point cloud of the vending machine.

Step 902: The electronic device 100 collects location information of the electronic device 100, and sends the location information of the electronic device 100 and the image visual sparse point cloud of the vending machine to the server corresponding to the vending machine.

Specifically, the electronic device 100 may obtain current location information of the electronic device 100 through a GPS sensor.

Step 903: The server corresponding to the vending machine narrows down an identification range based on the location information of the electronic device 100, and identifies the vending machine based on the image visual sparse point cloud.

In this embodiment, the server corresponding to the vending machine may be the server 300 having the structure shown in FIG. 3. When the structure shown in FIG. 3 is used for implementation, the database 330 in the server corresponding to the vending machine stores information about the vending machine. The information about the vending machine includes: an image visual sparse point cloud of the vending machine, a location of the vending machine, a device identifier of the vending machine, and a model number of the vending machine.

Specifically, the server corresponding to the vending machine may determine an identification range based on the location information of the electronic device 100, then obtain, from the database 330, an image visual sparse point cloud of the vending machine whose location is within the identification range, and match the image visual sparse point cloud sent by the electronic device 100 with the image visual sparse point cloud of the vending machine that is stored in the database 330, to complete identification for the vending machine.

Step 904: The server corresponding to the vending machine obtains a device identifier of the vending machine based on an identification result of the vending machine.

As described above, the server corresponding to the vending machine matches the image visual sparse point cloud sent by the electronic device 100 with the image visual sparse point cloud of the vending machine that is stored in the database 330. After obtaining an image visual sparse point cloud matched with the image visual sparse point cloud sent by the electronic device 100, the server corresponding to the vending machine may obtain, from the database 330, the device identifier of the vending machine that corresponds to the matched image visual sparse point cloud.

Step 905: The server corresponding to the vending machine may obtain, based on the device identifier of the vending machine, inventory information of the vending machine from a database connected to the server corresponding to the vending machine.

In this embodiment, when the server corresponding to the vending machine is implemented by using the structure shown in FIG. 3, the database 330 in the server corresponding to the vending machine stores inventory information of the vending machine operated by an operator of the vending machine. Therefore, after obtaining the device identifier of the vending machine, the server corresponding to the vending machine may obtain, from the database 330, inventory information of the vending machine having the device identifier.

Step 906: The server corresponding to the vending machine sends the device identifier, the inventory information, and an operation model (including a 2D model, a 3D model, or the like) of the vending machine to the electronic device 100.

Specifically, when the structure shown in FIG. 3 is used for implementation, the database 330 in the server corresponding to the vending machine may further store operation models of vending machines of a plurality of model numbers, and the plurality of model numbers of the vending machines belong to the operator of the vending machine. After obtaining the device identifier of the vending machine, the server corresponding to the vending machine may determine a model number of the vending machine based on the device identifier, to obtain an operation model of the vending machine of the model number.

After the server corresponding to the vending machine sends the operation model of the vending machine to the electronic device 100, the electronic device 100 may display a user operation interface corresponding to the operation model of the vending machine. The user operation interface corresponding to the operation model may include a user operation interface of a 2D model and a user operation interface of a 3D model, which are respectively shown in FIG. 7(a) and FIG. 7(b).

Step 907: After the user selects a commodity and taps a purchase button, the electronic device 100 sends, to the server corresponding to the vending machine, an order of the commodity selected by the user, where the order carries a payment channel selected by the user, for example, a bank card or a third-party payment platform.

For example, the user may select "Soda 2" on the interface shown in FIG. 7(a), and tap "Submit an order". Then, the electronic device 100 may send, to the server corresponding to the vending machine, an order of the " Soda 2" purchased by the user.

Step 908: The server corresponding to the vending machine creates the order and records order information.

Specifically, when creating the order, the server corresponding to the vending machine signs the order by using a key issued by a payment channel.

Step 909: The server corresponding to the vending machine sends an order identifier to the electronic device 100.

Step 910: The user selects a payment manner (for example, a credit card, a debit card, or a balance) for payment, and after obtaining a payment operation of the user, the electronic device 100 creates a payment order on a corresponding payment server (generally by using an SDK corresponding to a payment channel) and completes payment.

Step 911: The electronic device 100 receives a payment completion result sent by the payment server, and displays the payment completion result.

Step 912: The payment server notifies the server corresponding to the vending machine of the payment completion result.

The notification carries the order identifier.

Step 913: The server corresponding to the vending machine verifies that the order has been paid, and initiates a shipment instruction.

Step 914: The vending machine pops up the commodity.

According to the foregoing contactless operation method, physical contact between the user and the vending machine can be reduced, to reduce a risk of virus infection. For an existing vending machine, shopping can also be completed in a scenario in which a physical button or a large screen is damaged or does not work. In addition, manufacturing costs of the vending machine can be reduced. A button or a large screen may not be required, that is, for the vending machine, a component required for an information input operation is removed. If a plurality of users simultaneously purchase commodities on the vending machine, the users do not need to queue for commodity selecting and payment. Commodities purchased by different users can be distinguished by using sequence numbers of the commodities that are popped up. In some hot spots (for example, a scenic spot) or a scenario with limited time (during students' after-class), a user experience effect is excellent.

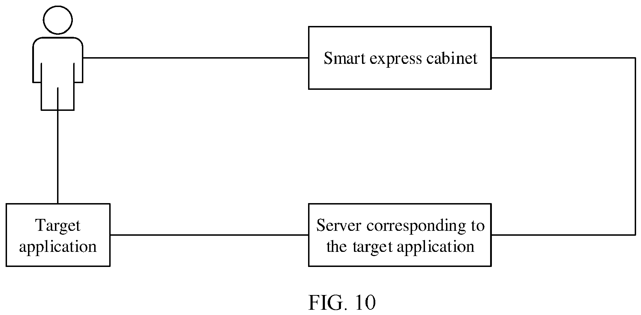

FIG. 10 is a schematic diagram of an application scenario according to still another embodiment of this application. The application scenario shown in FIG. 10 includes a user, a smart express cabinet, a target application, and a server corresponding to the target application.

The user uses the target application to scan the smart express cabinet or take a photo of the smart express cabinet.

The smart express cabinet performs an operation based on an instruction of the server corresponding to the target application.

The target application is an APP in which the user performs an operation such as scanning, photographing, and/or tapping on an electronic device such as a smartphone. In this application scenario, the target application may be a general-purpose APP having a photographing or scanning function, for example, an AR Engine APP, or a Scan applet. In this scenario, the electronic device may be the electronic device 100 having the structures shown in FIG. 1 and FIG. 2.

The server corresponding to the target application is a cloud that provides a business service for the target application, and can deliver an instruction to control the smart express cabinet to perform an operation. For example, the target application is an AR Engine APP. The server corresponding to the target application may be an AR server, and the AR server may be a cloud server.

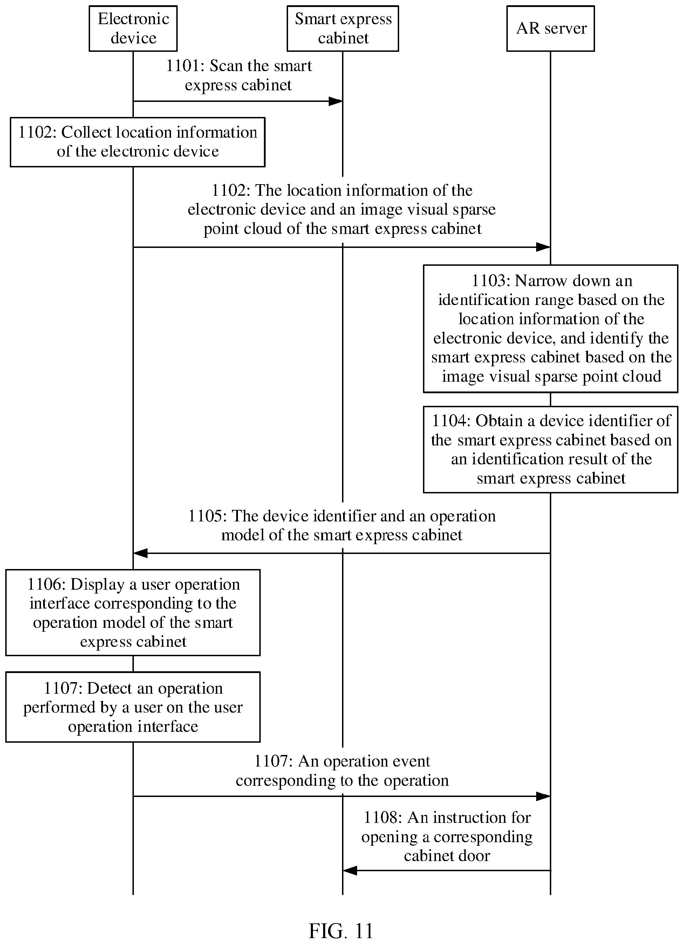

FIG. 11 is a flowchart of a contactless operation method according to still another embodiment of this application. This embodiment describes the contactless operation method in the application scenario shown in FIG. 10. As shown in FIG. 11, the contactless operation method may include the following steps.

Step 1101: The electronic device 100 scans the smart express cabinet by using an AR Engine APP, to obtain an image visual sparse point cloud of the smart express cabinet.

Specifically, an interface displayed after the AR Engine APP in the electronic device 100 is opened may be shown in FIG. 6. The interface shown in FIG. 6 is the interface displayed by the AR Engine APP, and the interface includes an AR scanning icon 61. After the user taps the AR scanning icon 61, the AR Engine APP may invoke the camera 193 in the electronic device 100 to scan the smart express cabinet, to obtain the image visual sparse point cloud of the smart express cabinet.

Step 1102: The electronic device 100 collects location information of the electronic device 100, and sends the location information of the electronic device 100 and the image visual sparse point cloud of the smart express cabinet to the AR server.

Step 1103: The AR server narrows down an identification range based on the location information of the electronic device 100, and identifies the smart express cabinet based on the image visual sparse point cloud.

In this embodiment, the AR server may be the server 300 having the structure shown in FIG. 3. When the structure shown in FIG. 3 is used for implementation, the database 330 in the AR server stores information about the smart express cabinet. The information about the smart express cabinet includes: an image visual sparse point cloud of the smart express cabinet, a location of the smart express cabinet, a device identifier of the smart express cabinet, a model number of the smart express cabinet, and an operator to which the smart express cabinet belongs.

Specifically, the AR server may determine an identification range based on the location information of the electronic device 100, then obtain, from the database 330, an image visual sparse point cloud of the smart express cabinet whose location is within the identification range, and match the image visual sparse point cloud sent by the electronic device 100 with the image visual sparse point cloud of the smart express cabinet that is stored in the database 330, to complete identification for the smart express cabinet.

Step 1104: The AR server obtains a device identifier of the smart express cabinet based on an identification result of the smart express cabinet.

As described above, the AR server matches the image visual sparse point cloud sent by the electronic device 100 with the image visual sparse point cloud of the smart express cabinet that is stored in the database 330. After obtaining an image visual sparse point cloud matched with the image visual sparse point cloud sent by the electronic device 100, the AR server may obtain, from the database 330, the device identifier of the smart express cabinet that corresponds to the matched image visual sparse point cloud.

Step 1105: The AR server sends the device identifier and an operation model (including a 2D model, a 3D model, or the like) of the smart express cabinet to the electronic device 100.

Specifically, when the structure shown in FIG. 3 is used for implementation, the database 330 in the AR server may further store operation models of smart express cabinets of a plurality of model numbers, and the plurality of model numbers of the smart express cabinets may belong to a same operator or different operators. After obtaining the device identifier of the smart express cabinet, the AR server may determine a model number of the smart express cabinet based on the device identifier, to obtain an operation model of the smart express cabinet of the model number.

Step 1106: The electronic device 100 displays a user operation interface corresponding to the operation model of the smart express cabinet.

Step 1107: After detecting an operation of the user on the user operation interface, the electronic device 100 sends, in response to the operation, an operation event corresponding to the operation to the AR server.

Step 1108: The AR server sends, to the smart express cabinet, an instruction for opening a corresponding cabinet door, to control the smart express cabinet to open the cabinet door.

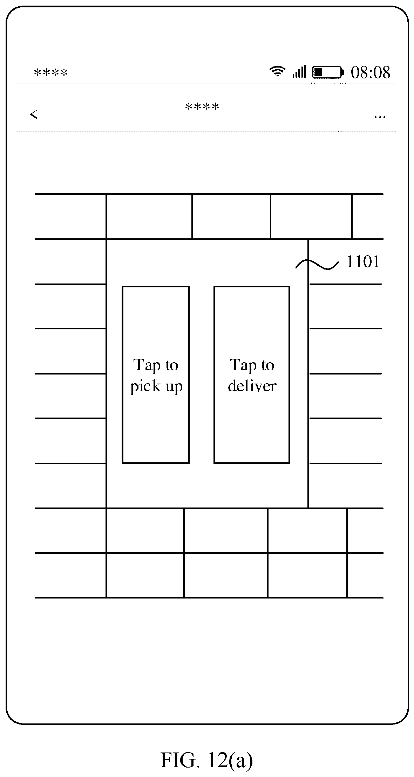

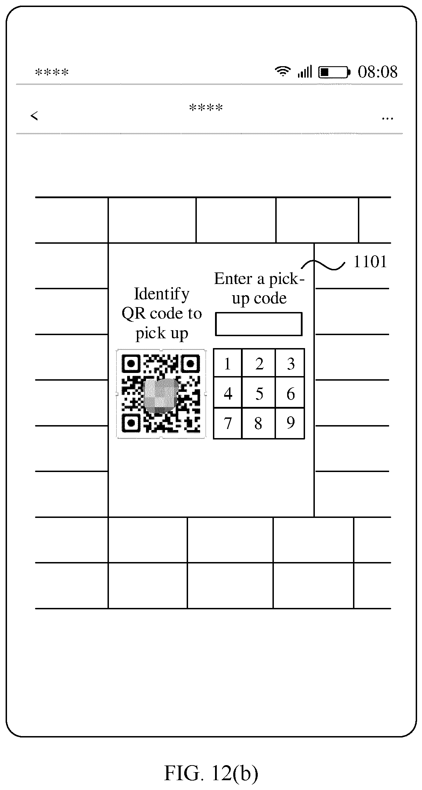

Specifically, in this embodiment, the user operation interface displayed by the electronic device 100 may be shown in FIG. 12(a) and FIG. 12(b). FIG. 12(a) and FIG. 12(b) each are a schematic diagram of a user operation interface of a smart express cabinet according to an embodiment of this application. Specifically, after the AR server sends the operation model of the smart express cabinet to the electronic device 100, the electronic device 100 may first display an interface shown in FIG. 12(a). The user performs a tapping operation on a "Tap to pick up" icon in an area 1101 on the interface shown in FIG. 12(a), and in this case, the electronic device 100 displays an interface shown in FIG. 12(b). Then, the user may enter a pick-up code in the area 1101 on the interface shown in FIG. 12(b), or identify QR code displayed in the area 1101 on the interface shown in FIG. 12(b). The area 1101 in FIG. 12(a) and FIG. 12(b) is a display in the smart express cabinet.

After detecting the operation of the user for entering a pick-up code or identifying QR code in the area 1101 on the interface shown in FIG. 12(b), the electronic device 100 sends, in response to the operation, a pick-up event corresponding to the operation to the AR server. Then, the AR server processes the pick-up event corresponding to the operation, and sends, to the smart express cabinet, an instruction for opening a corresponding cabinet door. In this way, the user can take out a parcel of the user without touching the smart express cabinet, to avoid a risk of spreading a virus through a physical medium.

The application scenario shown in FIG. 10 shows only one server, in other words, the AR server. In step 1108 in the embodiment shown in FIG. 11, an example in which the AR server controls the smart express cabinet to open a cabinet door is used for description. However, during specific implementation, a dual-server architecture similar to the architecture in FIG. 4 may also be used. After the electronic device 100 sends the operation event corresponding to the operation to the AR server, the AR server sends the operation event corresponding to the operation to a server corresponding to the smart express cabinet, and then the server corresponding to the smart express cabinet sends, to the smart express cabinet, an instruction for opening a corresponding cabinet door, to control the smart express cabinet to open the cabinet door.

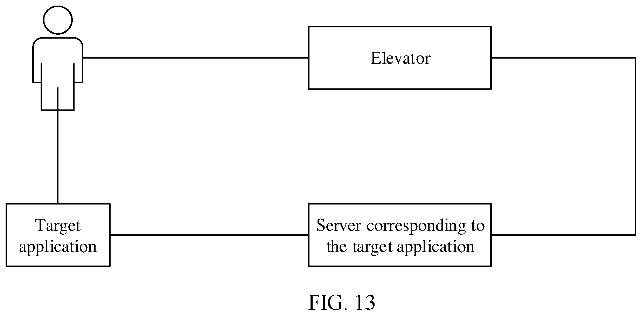

FIG. 13 is a schematic diagram of an application scenario according to still another embodiment of this application. The application scenario shown in FIG. 13 includes a user, an elevator, a target application, and a server corresponding to the target application.

The user uses the target application to scan the elevator or take a photo of the elevator.

The elevator performs an operation based on an instruction of the server corresponding to the target application.

The target application is an APP in which the user performs an operation such as scanning, photographing, and/or tapping on an electronic device such as a smartphone. In this application scenario, the target application may be a general-purpose APP having a photographing or scanning function, for example, an AR Engine APP, or a Scan applet. In this scenario, the electronic device may be the electronic device 100 having the structures shown in FIG. 1 and FIG. 2.

The server corresponding to the target application is a cloud that provides a business service for the target application, and can deliver an instruction to control the elevator to perform an operation. For example, the target application is an AR Engine APP. The server corresponding to the target application may be an AR server, and the AR server may be a cloud server.

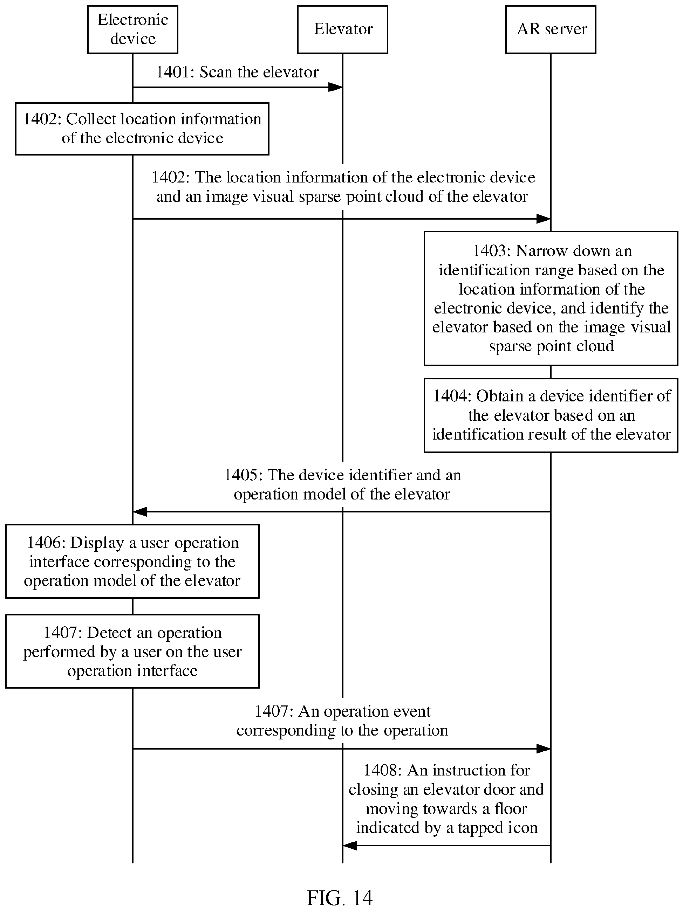

FIG. 14 is a flowchart of a contactless operation method according to still another embodiment of this application. This embodiment describes the contactless operation method in the application scenario shown in FIG. 13. As shown in FIG. 14, the contactless operation method may include the following steps.

Step 1401: The electronic device 100 scans the elevator by using an AR Engine APP, to obtain an image visual sparse point cloud of the elevator.

Specifically, an interface displayed after the AR Engine APP in the electronic device 100 is opened may be shown in FIG. 6. The interface shown in FIG. 6 is the interface displayed by the AR Engine APP, and the interface includes an AR scanning icon 61. After the user taps the AR scanning icon 61, the AR Engine APP may invoke the camera 193 in the electronic device 100 to scan the elevator, to obtain the image visual sparse point cloud of the elevator.

Step 1402: The electronic device 100 collects location information of the electronic device 100, and sends the location information of the electronic device 100 and the image visual sparse point cloud of the elevator to the AR server.

Step 1403: The AR server narrows down an identification range based on the location information of the electronic device 100, and identifies the elevator based on the image visual sparse point cloud.

In this embodiment, the AR server may be the server 300 having the structure shown in FIG. 3. When the structure shown in FIG. 3 is used for implementation, the database 330 in the AR server stores information about the elevator. The information about the elevator includes: an image visual sparse point cloud of the elevator, a location of the elevator, a device identifier of the elevator, a model number of the elevator, and an operator to which the elevator belongs.

Specifically, the AR server may determine an identification range based on the location information of the electronic device 100, then obtain, from the database 330, an image visual sparse point cloud of the elevator whose location is within the identification range, and match the image visual sparse point cloud sent by the electronic device 100 with the image visual sparse point cloud of the elevator that is stored in the database 330, to complete identification for the elevator.

Step 1404: The AR server obtains a device identifier of the elevator based on an identification result of the elevator.

As described above, the AR server matches the image visual sparse point cloud sent by the electronic device 100 with the image visual sparse point cloud of the elevator that is stored in the database 330. After obtaining an image visual sparse point cloud matched with the image visual sparse point cloud sent by the electronic device 100, the AR server may obtain, from the database 330, the device identifier of the elevator that corresponds to the matched image visual sparse point cloud.

Step 1405: The AR server sends the device identifier and an operation model (including a 2D model, a 3D model, or the like) of the elevator to the electronic device 100.

Specifically, when the structure shown in FIG. 3 is used for implementation, the database 330 in the AR server may further store operation models of elevators of a plurality of model numbers, and the plurality of model numbers of the elevators may belong to a same operator or different operators. After obtaining the device identifier of the elevator, the AR server may determine a model number of the elevator based on the device identifier, to obtain an operation model of the elevator of the model number.

Step 1406: The electronic device 100 displays a user operation interface corresponding to the operation model of the elevator.

Step 1407: After detecting an operation of the user on the user operation interface, the electronic device 100 sends, in response to the operation, an operation event corresponding to the operation to the AR server.

Step 1408: The AR server sends, to the elevator, an instruction for closing an elevator door and moving toward a floor indicated by the tapped icon, to control the elevator to execute the instruction.

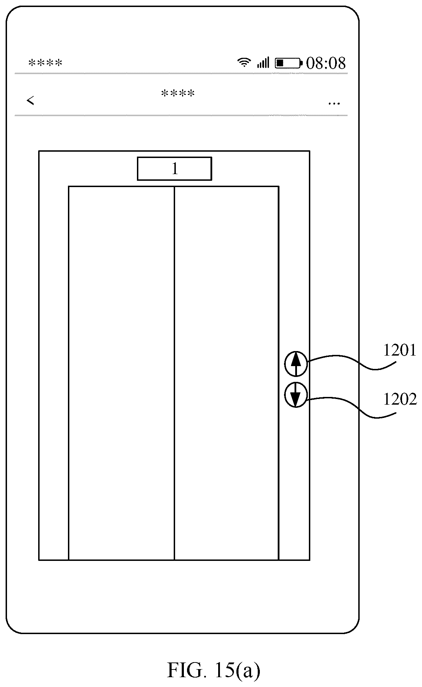

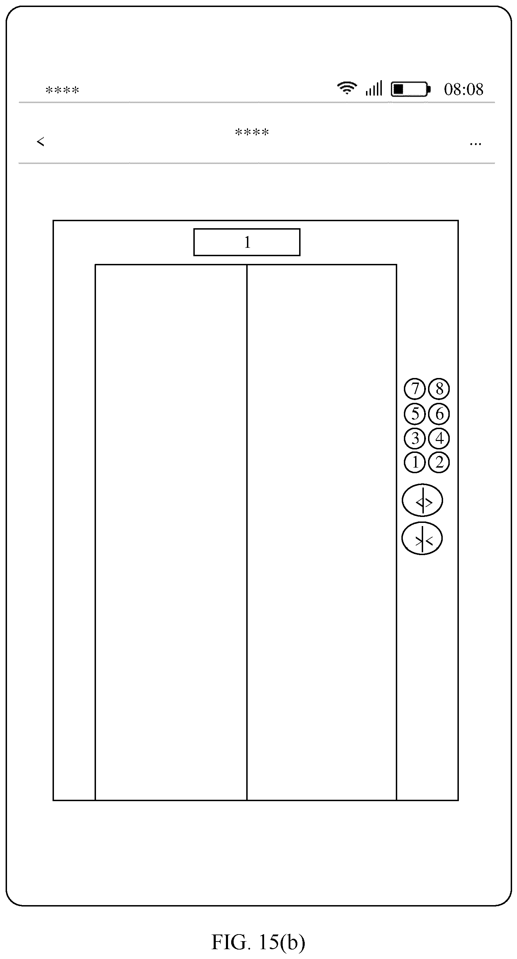

Specifically, in this embodiment, the user operation interface displayed by the electronic device 100 may be shown in FIG. 15(a) and FIG. 15(b). FIG. 15(a) and FIG. 15(b) each are a schematic diagram of a user operation interface of an elevator according to an embodiment of this application. Specifically, after the AR server sends the operation model of the elevator to the electronic device 100, the electronic device 100 may first display an interface shown in FIG. 15(a). After the user taps an up icon 1201 or a down icon 1202 on the interface shown in FIG. 15(a), the electronic device 100 displays an interface shown in FIG. 15(b). After detecting the operation of the user for tapping the up icon 1201 or the down icon 1202, the electronic device 100 sends, in response to the operation, an operation event corresponding to the operation to the AR server. Then, the AR server processes the operation event corresponding to the operation, and sends, to the elevator, an instruction for opening an elevator door. After the user enters the elevator, the user may tap an icon of a desired floor on the interface shown in FIG. 15(b). After detecting the operation of the user for tapping the icon of the desired floor, the electronic device 100 sends, in response to the operation, an operation event corresponding to the operation to the AR server. The AR server processes the operation event corresponding to the operation, and sends an instruction for closing the elevator door and moving toward the floor indicated by the tapped icon. In this way, the user can operate the elevator without touching the elevator, and reach a floor that the user wants to go to, to avoid a risk of spreading a virus through a physical medium.

The application scenario shown in FIG. 13 shows only one server, in other words, the AR server. In step 1408 in the embodiment shown in FIG. 14, an example in which the AR server controls the elevator to execute an instruction is used for description. However, during specific implementation, a dual-server architecture similar to the architecture in FIG. 4 may also be used. After the electronic device 100 sends the operation event corresponding to the operation to the AR server, the AR server sends the operation event corresponding to the operation to a server corresponding to the elevator, and the server corresponding to the elevator sends an instruction for closing the elevator door and moving toward a floor indicated by a tapped icon, to control the elevator to execute the instruction.

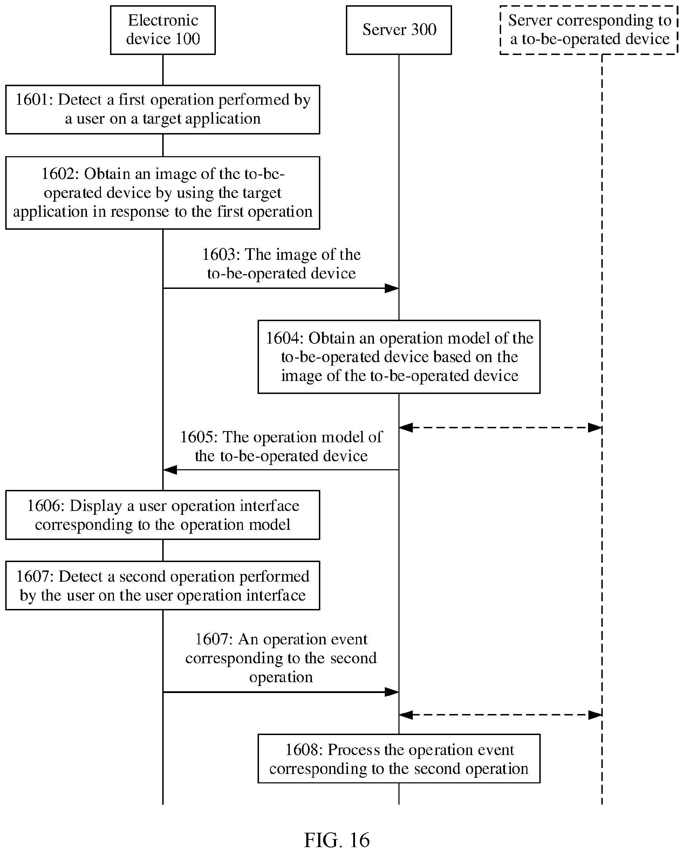

FIG. 16 is a flowchart of a contactless operation method according to still another embodiment of this application. As shown in FIG. 16, the contactless operation method may include the following steps.

Step 1601: The electronic device 100 detects a first operation performed by a user on a target application on the electronic device.

The first operation may be an operation such as tapping, double-tapping, or touching and holding performed by the user on a specific icon on an interface displayed by the target application, or the first operation may be a voice instruction entered by the user for performing a specific operation on the target application. An operation form of the first operation is not limited in this embodiment. The specific icon may be a photographing or scanning icon, and the specific operation may be a photographing or scanning operation performed by using the target application.

Specifically, the electronic device 100 may implement the operation of step 1601 through the processor 110 and the touch sensor 180K, or through the processor 110, the audio module 170, and the microphone 170C.

Step 1602: The electronic device 100 obtains an image of a to-be-operated device by using the target application in response to the first operation.

The to-be-operated device may be a vending machine, a smart express cabinet, an elevator, or the like. A specific type of the to-be-operated device is not limited in this embodiment, provided that the to-be-operated device can communicate with the server 300 and perform a corresponding operation based on an instruction of the server 300.

In this embodiment, that the electronic device 100 obtains an image of a to-be-operated device by using the target application may include:

The electronic device 100 takes a photo of the to-be-operated device by using the target application, to obtain the image of the to-be-operated device; or the electronic device 100 scans the to-be-operated device by using the target application, to obtain an image visual sparse point cloud of the to-be-operated device.

Step 1603: The electronic device 100 sends the image of the to-be-operated device to the server 300 corresponding to the target application.

In this embodiment, the target application may be a general-purpose APP having a photographing or scanning function, for example, an AR Engine APP or a Scan applet. In this case, for example, the target application is an AR Engine APP, the server 300 corresponding to the target application may be an AR server.

Alternatively, the target application may be an APP operated by an operator of the to-be-operated device, for example, the to-be-operated device is a vending machine. The target application may be a vending machine APP or a vending machine applet, and the server 300 corresponding to the target application may be a server corresponding to the vending machine.

Step 1604: The server 300 obtains an operation model of the to-be-operated device based on the image of the to-be-operated device.

Specifically, that the server 300 obtains an operation model of the to-be-operated device based on the image of the to-be-operated device may be: The server 300 obtains a device identifier of the to-be-operated device based on the image of the to-be-operated device, and obtains the operation model of the to-be-operated device based on the device identifier of the to-be-operated device.

The device identifier of the to-be-operated device may be a character string that can uniquely identify the to-be-operated device, such as a serial number of the to-be-operated device.

In an implementation, the image of the to-be-operated device includes electronic information code of the to-be-operated device, where the electronic information code may be a bar code or QR code. A specific form of the electronic information code is not limited in this embodiment. In this way, that the server 300 obtains a device identifier of the to-be-operated device based on the image of the to-be-operated device may be: The server 300 identifies the electronic information code of the to-be-operated device included in the image, to obtain the device identifier of the to-be-operated device.

That is, in this implementation, for example, the electronic information code is QR code. The device identifier of the to-be-operated device may be encoded in advance, to obtain QR code corresponding to the device identifier. Then, the QR code corresponding to the device identifier is pasted or printed on the to-be-operated device. After obtaining an image of the QR code by using the target application, the electronic device 100 sends the image of the QR code to the server 300, and the server 300 identifies the image of the QR code, to obtain the device identifier of the to-be-operated device.

In another implementation, after step 1601, the electronic device 100 may further obtain location information of the electronic device, and send the location information of the electronic device to the server 300 corresponding to the target application. In this case, that the server 300 obtains a device identifier of the to-be-operated device based on the image of the to-be-operated device may be: The server 300 identifies, based on the location information of the electronic device, the to-be-operated device included in the image of the to-be-operated device; and then the server 300 obtains the device identifier of the to-be-operated device based on an identification result of the to-be-operated device.

Specifically, the electronic device 100 may obtain current location information of the electronic device 100 through a GPS sensor, and then send the location information of the electronic device to the server 300 corresponding to the target application. The location information includes a longitude, a latitude, and an altitude of a current location of the user.

Further, after obtaining the device identifier of the to-be-operated device, the server 300 may obtain the operation model of the to-be-operated device based on the device identifier of the to-be-operated device.

During specific implementation, the database 330 in the server 300 pre-stores operation models of to-be-operated devices of a plurality of model numbers, and the plurality of model numbers of the to-be-operated devices may belong to a same operator or different operators. After obtaining the device identifier of the to-be-operated device, the server 300 may determine a model number of the to-be-operated device based on the device identifier, to obtain an operation model of the to-be-operated device of the model number.

In addition, when the to-be-operated device is a vending machine, if the server 300 is an AR server, the server 300 may obtain inventory information of the vending machine from a server corresponding to the vending machine; or if the server 300 is a server corresponding to the vending machine, the server 300 may obtain inventory information of the vending machine from the database 330.

Alternatively, when the to-be-operated device is another type of device, for example, a smart express cabinet or an elevator. If the server 300 is an AR server, the server 300 may control the to-be-operated device through a server corresponding to the to-be-operated device.

Step 1605: The server 300 sends the operation model of the to-be-operated device to the electronic device 100.

Specifically, the server 300 may implement the operation of step 1605 through the processor 310 and the communications interface 350.

Step 1606: The electronic device 100 displays a user operation interface corresponding to the operation model.

Specifically, the electronic device 100 may implement the operation of step 1606 through the GPU, the display 194, and the like that are included in the processor 110.

Step 1607: After detecting a second operation of the user on the user operation interface, the electronic device 100 sends, in response to the second operation, an operation event corresponding to the second operation to the server 300.

The second operation includes an operation performed by the user on the user operation interface. The user performs different operations on the user operation interface based on different to-be-operated devices. A specific operation form included in the second operation is not limited in this embodiment.

Specifically, the electronic device 100 may send and receive information to and from the server 300 through the processor 110, the antenna 1, and the mobile communications module 150, and/or by using the processor 110, the antenna 2, and the wireless communications module 160.

Step 1608: The server 300 processes the operation event corresponding to the second operation.

In the foregoing contactless operation method, after the electronic device 100 obtains the image of the to-be-operated device by using the target application, and the electronic device 100 may send the image of the to-be-operated device to the server 300 corresponding to the target application. Then, the server 300 may obtain the operation model of the to-be-operated device based on the image of the to-be-operated device, and the server 300 sends the operation model of the to-be-operated device to the electronic device 100. Next, the electronic device 100 may display the user operation interface corresponding to the operation model, and the user may perform an operation on the user operation interface displayed by the electronic device 100. The electronic device 100 sends the operation event corresponding to the second operation of the user to the server 300, and the server 300 processes the operation event corresponding to the second operation. Therefore, the user can operate the to-be-operated device without touching the to-be-operated device, to avoid a risk of spreading a virus through a physical medium. When a physical button of the to-be-operated device is damaged or does not work, or an operation is insensitive, the user can operate the to-be-operated device on the electronic device 100 used by the user, and a plurality of users can simultaneously operate the to-be-operated device when the user operates the to-be-operated device on the electronic device 100 used by the user, so that user experience is improved.

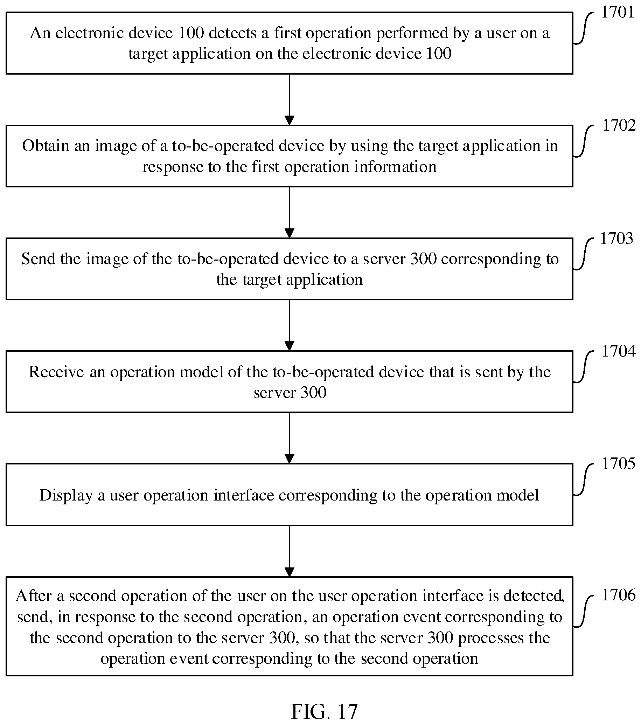

FIG. 17 is a flowchart of a contactless operation method according to still another embodiment of this application. As shown in FIG. 17, the contactless operation method may include the following steps.

Step 1701: The electronic device 100 detects a first operation performed by a user on a target application on the electronic device 100.

The first operation may be an operation such as tapping, double-tapping, or touching and holding performed by the user on a specific icon on an interface displayed by the target application, or the first operation may be a voice instruction entered by the user to perform a specific operation on the target application. An operation form of the first operation is not limited in this embodiment. The specific icon may be a photographing or scanning icon, and the specific operation may be a photographing or scanning operation performed by using the target application.

Specifically, the electronic device 100 may implement the operation of step 1701 through the processor 110 and the touch sensor 180K, or through the processor 110, the audio module 170, and the microphone 170C.

Step 1702: Obtain an image of a to-be-operated device by using the target application in response to the first operation.

The to-be-operated device may be a vending machine, a smart express cabinet, an elevator, or the like. A specific type of the to-be-operated device is not limited in this embodiment, provided that the to-be-operated device can communicate with the server 300 and perform a corresponding operation based on an instruction of the server 300.

Specifically, the obtaining an image of a to-be-operated device by using the target application may be: invoking the camera 193 in the electronic device 100 by using the target application to photograph the to-be-operated device, to obtain the image of the to-be-operated device; or invoking the camera 193 in the electronic device 100 by using the target application to scan the to-be-operated device, to obtain an image visual sparse point cloud of the to-be-operated device.

In this embodiment, the target application may be a general-purpose APP having a photographing or scanning function, for example, an AR Engine APP or a Scan applet; alternatively, the target application may be an APP operated by an operator of the to-be-operated device.

The following describes a process of obtaining the image of the to-be-operated device by using an example in which the target application is an AR Engine APP. FIG. 6 is a schematic diagram of an AR scanning interface according to an embodiment of this application. The interface shown in FIG. 6 is the interface displayed by an AR Engine APP. The interface includes an AR scanning icon 61. After a user taps the AR scanning icon 61, the AR Engine APP may invoke the camera 193 in the electronic device 100 to scan the to-be-operated device, to obtain the image visual sparse point cloud of the to-be-operated device.

That is, the electronic device 100 may implement the operation of step 1702 through the ISP, the camera 193, the video codec, the GPU, the display 194, the application processor, and the like.

Step 1703: Send the image of the to-be-operated device to the server 300 corresponding to the target application.

In this embodiment, the target application may be a general-purpose APP having a photographing or scanning function, for example, an AR Engine APP or a Scan applet. In this case, for example, the target application is an AR Engine APP, the server 300 corresponding to the target application may be an AR server.

Alternatively, the target application may be an APP operated by an operator of the to-be-operated device, for example, the to-be-operated device is a vending machine. The target application may be a vending machine APP or a vending machine applet, and the server 300 corresponding to the target application may be a server corresponding to the vending machine.

Step 1704: Receive an operation model of the to-be-operated device that is sent by the server 300.

The operation model of the to-be-operated device is obtained by the server 300 based on the image of the to-be-operated device.

Step 1705: Display a user operation interface corresponding to the operation model.

Specifically, the electronic device 100 may implement the operation of step 1705 through the GPU, the display 194, and the like that are included in the processor 110.

Step 1706: after a second operation of the user on the user operation interface is detected, send, in response to the second operation, an operation event corresponding to the second operation to the server 300, so that the server 300 processes the operation event corresponding to the second operation.

The second operation includes an operation performed by the user on the user operation interface. The user performs different operations on the user operation interface based on different to-be-operated devices. A specific operation form included in the second operation is not limited in this embodiment.

Specifically, the electronic device 100 may send and receive information to and from the server 300 through the processor 110, the antenna 1, and the mobile communications module 150, and/or by using the processor 110, the antenna 2, and the wireless communications module 160.

In the foregoing contactless operation method, after the electronic device 100 obtains the image of the to-be-operated device by using the target application, and the electronic device 100 may send the image of the to-be-operated device to the server 300 corresponding to the target application. Then, the operation model of the to-be-operated device that is sent by the server 300 may be received, and the user operation interface corresponding to the operation model may be displayed. In this way, the user may perform an operation on the user operation interface. After the electronic device 100 sends the operation event corresponding to the second operation of the user to the server 300, the server 300 processes the operation event corresponding to the second operation. Therefore, the user can operate the to-be-operated device without touching the to-be-operated device, to avoid a risk of spreading a virus through a physical medium. When a physical button of the to-be-operated device is damaged or does not work, or an operation is insensitive, the user can operate the to-be-operated device on the electronic device 100 used by the user, and a plurality of users can simultaneously operate the to-be-operated device when the user operates the to-be-operated device on the electronic device 100 used by the user, so that user experience is improved.

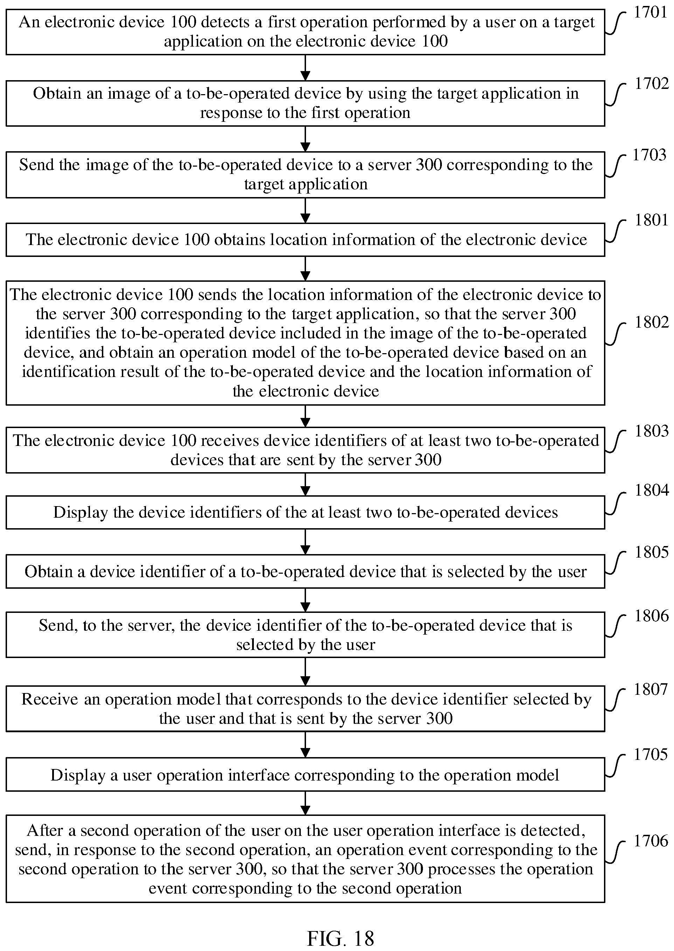

FIG. 18 is a flowchart of a contactless operation method according to still another embodiment of this application. As shown in FIG. 18, in the embodiment shown in FIG. 17 of this application, after step 1701, the method may further include the following steps.

Step 1801: The electronic device 100 obtains location information of the electronic device.

Specifically, the electronic device 100 may obtain current location information of the electronic device 100 through a GPS sensor.

Step 1802: The electronic device 100 sends the location information of the electronic device to the server 300 corresponding to the target application, so that the server 300 identifies the to-be-operated device included in the image of the to-be-operated device, and obtains an operation model of the to-be-operated device based on an identification result of the to-be-operated device and the location information of the electronic device.

Step 1801 and step 1802 may be performed concurrently or sequentially with step 1702 and step 1703. A sequence of performing step 1801 and step 1802 is not limited in this embodiment, provided that step 1801 and step 1802 are performed after step 1701. FIG. 18 shows an example in which step 1801 and step 1802 are performed after step 1702 and step 1703.

In this way, before step 1704, the method may further include the following steps:

Step 1803: The electronic device 100 receives device identifiers of at least two to-be-operated devices that are sent by the server 300.

The device identifier of the to-be-operated device may be a character string that can uniquely identify the to-be-operated device, such as a serial number of the to-be-operated device.

Step 1804: Display the device identifiers of the at least two to-be-operated devices.

Specifically, the electronic device 100 may implement the operation of step 1804 through the GPU, the display 194, and the like that are included in the processor 110.

Step 1805: Obtain a device identifier selected by the user.

Specifically, the electronic device 100 may implement the operation of step 1805 through the processor 110 and the touch sensor 180K.

Step 1806: Send, to the server 300, the device identifier selected by the user.

In this way, step 1704 may be as follows:

Step 1807: Receive an operation model that corresponds to the device identifier selected by the user and that is sent by the server 300.

Generally, there may be a plurality of to-be-operated devices at a specific location, but there is relatively low probability that a plurality of to-be-operated devices of a same model number of a same manufacturer are deployed at a same location. If the server 300 cannot uniquely determine a to-be-operated device based on location information and images of to-be-operated devices, the server 300 may return device identifiers of the plurality of to-be-operated devices to the electronic device 100. The electronic device 100 displays device identifiers of at least two to-be-operated devices to the user, and the user selects a device identifier of a to-be-operated device. Then, the electronic device 100 sends, to the server 300, the device identifier of the to-be-operated device that is selected by the user. Further, the server 300 may obtain an operation model of the to-be-operated device based on the device identifier of the to-be-operated device that is selected by the user, and send, to the electronic device 100, the operation model corresponding to the device identifier of the to-be-operated device that is selected by the user.

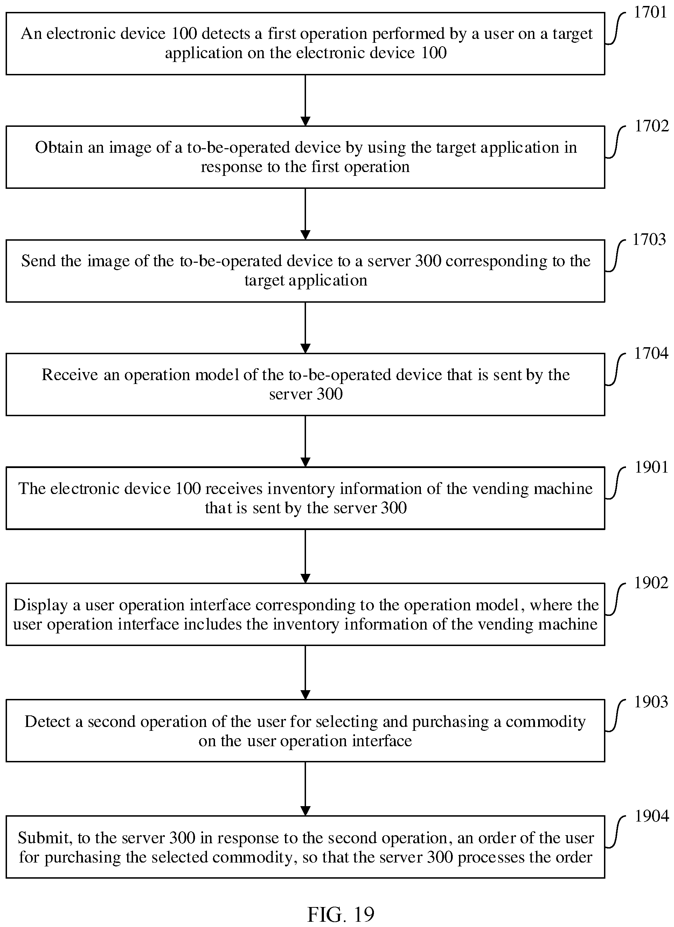

FIG. 19 is a flowchart of a contactless operation method according to still another embodiment of this application. As shown in FIG. 19, in the embodiment shown in FIG. 17 of this application, the to-be-operated device may be a vending machine; and before step 1705, the method may further include the following steps.

Step 1901: The electronic device 100 receives inventory information of the vending machine that is sent by the server 300.

In this way, step 1705 may be as follows:

Step 1902: Display the user operation interface corresponding to the operation model, where the user operation interface includes the inventory information of the vending machine.

In this embodiment, the user operation interface corresponding to the operation model may include a user operation interface corresponding to a 2D model and a user operation interface corresponding to a 3D model, which are respectively shown in FIG. 9(a) and FIG. 9(b). FIG. 9(a) is a schematic diagram of a user operation interface corresponding to a 2D model according to an embodiment of this application, and FIG. 9(b) is a schematic diagram of a user operation interface corresponding to a 3D model according to another embodiment of this application.

It can be learned from FIG. 9(a) that the user operation interface corresponding to the 2D model includes a picture, a price, and inventory information of a commodity that can be selected. It can be learned from FIG. 9(b) that the user operation interface corresponding to the 3D model includes a 3D model of a vending machine. FIG. 9(b) shows a 3D model of the large-screen vending machine by using a large-screen vending machine as an example. A menu for selecting a commodity on the user operation interface of the 3D model is consistent with a menu of a real large-screen vending machine. As shown in FIG. 9(b), an area marked with 91 is a commodity placement area of the large-screen vending machine, and an area marked with 92 is a display of the large-screen vending machine. A commodity menu of the large-screen vending machine is displayed in the area marked with 92, and the user may select a required commodity in the area marked with 92.

Specifically, the electronic device 100 may implement the operation of step 1902 through the GPU, the display 194, and the like that are included in the processor 110.

Therefore, step 1706 may include the following steps:

Step 1903: Detect the second operation of the user for selecting and purchasing a commodity on the user operation interface.

Referring to FIG. 9(a), the second operation may include an operation of the user for selecting "Soda 2" and an operation of the user for tapping "Submit an order".

Specifically, the electronic device 100 may implement the operation of step 1903 through the processor 110 and the touch sensor 180K.

Step 1904: Submit, to the server 300 in response to the second operation, an order of the user for purchasing the selected commodity, so that the server 300 processes the order.

The order includes information about a payment channel selected by the user. The information about the payment channel selected by the user includes a payment channel selected by the user for payment, where the payment channel may include a bank card, a third-party payment platform, or the like.

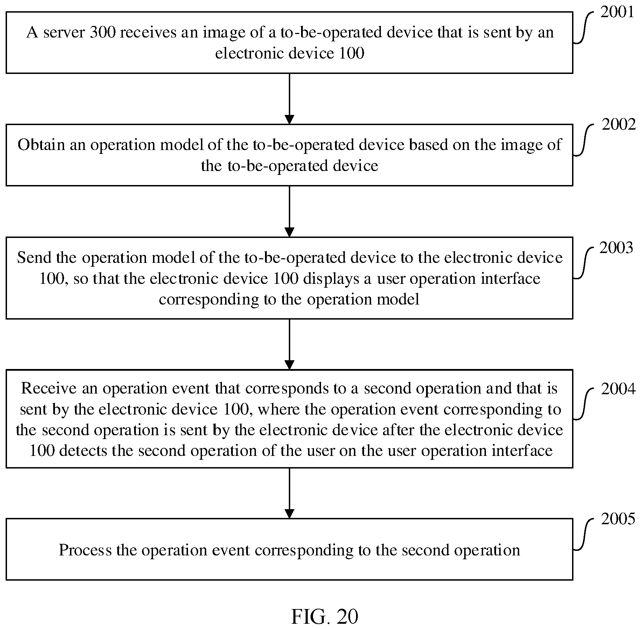

FIG. 20 is a flowchart of a contactless operation method according to still another embodiment of this application. As shown in FIG. 20, the contactless operation method may include the following steps.

Step 2001: The server 300 receives an image of a to-be-operated device that is sent by the electronic device 100.

The server 300 is a server corresponding to a target application, and the image of the to-be-operated device is obtained by using the target application after the electronic device 100 detects a first operation performed by a user using the electronic device 100 on the target application.

In this embodiment, the target application may be a general-purpose APP having a photographing or scanning function, for example, an AR Engine APP or a Scan applet. In this case, for example, the target application is an AR Engine APP, the server 300 corresponding to the target application may be an AR server.

Alternatively, the target application may be an APP operated by an operator of the to-be-operated device, for example, the to-be-operated device is a vending machine. The target application may be a vending machine APP or a vending machine applet, and the server 300 corresponding to the target application may be a server corresponding to the vending machine.

Step 2002: Obtain an operation model of the to-be-operated device based on the image of the to-be-operated device.

Specifically, the obtaining an operation model of the to-be-operated device based on the image of the to-be-operated device may be: obtaining a device identifier of the to-be-operated device based on the image of the to-be-operated device, and obtaining the operation model of the to-be-operated device based on the device identifier of the to-be-operated device.

The device identifier of the to-be-operated device may be a character string that can uniquely identify the to-be-operated device, such as a serial number of the to-be-operated device.

In this embodiment, after obtaining the device identifier of the to-be-operated device, the server 300 may obtain the operation model of the to-be-operated device based on the device identifier of the to-be-operated device.

During specific implementation, the server 300 pre-stores operation models of to-be-operated devices of a plurality of model numbers, and the plurality of model numbers of the to-be-operated devices may belong to a same operator or different operators. After obtaining the device identifier of the to-be-operated device, the server 300 may determine a model number of the to-be-operated device based on the device identifier, to obtain an operation model of the to-be-operated device of the model number.

Step 2003: Send the operation model of the to-be-operated device to the electronic device 100, so that the electronic device 100 displays a user operation interface corresponding to the operation model.

Step 2004: Receive an operation event that corresponds to a second operation and that is sent by the electronic device 100, where the operation event corresponding to the second operation is sent by the electronic device after the electronic device 100 detects the second operation of the user on the user operation interface.

Specifically, the server 300 may implement the operations of step 2003 and step 2004 through the processor 310 and the communications interface 350.

Step 2005: Process the operation event corresponding to the second operation.

Specifically, the second operation includes an operation performed by the user on the user operation interface. The user performs different operations on the user operation interface based on different to-be-operated devices. A specific operation form included in the second operation is not limited in this embodiment. Correspondingly, the server 300 processes the operation event corresponding to the second operation in a different manner.

In the foregoing contactless operation method, after receiving the image of the to-be-operated device that is sent by the electronic device 100, the server 300 may obtain the operation model of the to-be-operated device based on the image of the to-be-operated device, and then the server 300 sends the operation model of the to-be-operated device to the electronic device 100. Next, the server 300 receives the operation event that corresponds to the second operation and that is sent by the electronic device 100, and processes the operation event corresponding to the second operation. Therefore, the user can operate the to-be-operated device without touching the to-be-operated device, to avoid a risk of spreading a virus through a physical medium. When a physical button of the to-be-operated device is damaged or does not work, or an operation is insensitive, the user can operate the to-be-operated device on the electronic device 100 used by the user, and a plurality of users can simultaneously operate the to-be-operated device when the user operates the to-be-operated device on the electronic device 100 used by the user, so that user experience is improved.

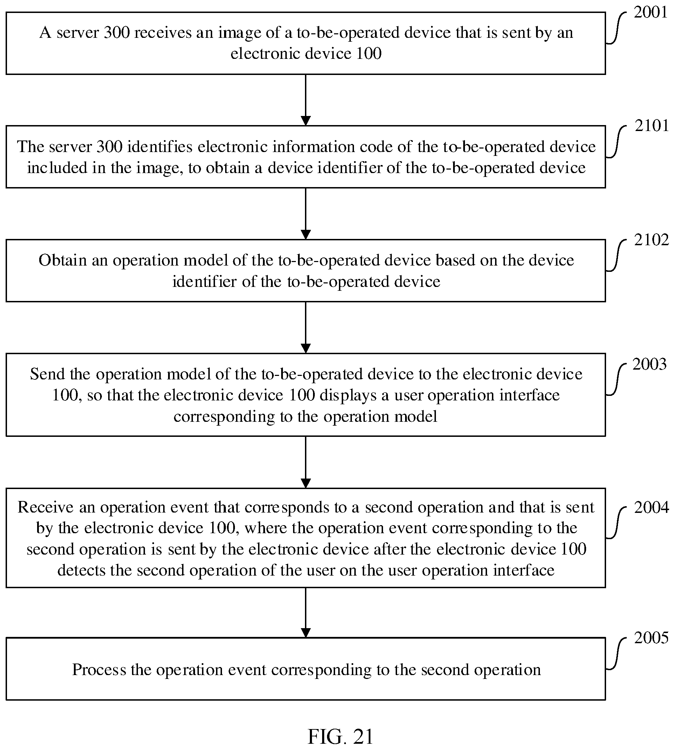

FIG. 21 is a flowchart of a contactless operation method according to still another embodiment of this application. As shown in FIG. 21, in the embodiment shown in FIG. 20 of this application, the image of the to-be-operated device may include electronic information code of the to-be-operated device, and the electronic information code may be a bar code or QR code. A specific form of the electronic information code is not limited in this embodiment. In this way, step 2002 may include the following steps:

Step 2101: The server 300 identifies the electronic information code of the to-be-operated device included in the image, to obtain the device identifier of the to-be-operated device.

That is, in this embodiment, for example, the electronic information code is QR code. The device identifier of the to-be-operated device may be encoded in advance, to obtain QR code corresponding to the device identifier. Then, the QR code corresponding to the device identifier is pasted or printed on the to-be-operated device. After obtaining an image of the QR code by using the target application, the electronic device 100 sends the image of the QR code to the server 300, and then the server 300 identifies the image of the QR code, to obtain the device identifier of the to-be-operated device.

Step 2102: Obtain an operation model of the to-be-operated device based on the device identifier of the to-be-operated device.

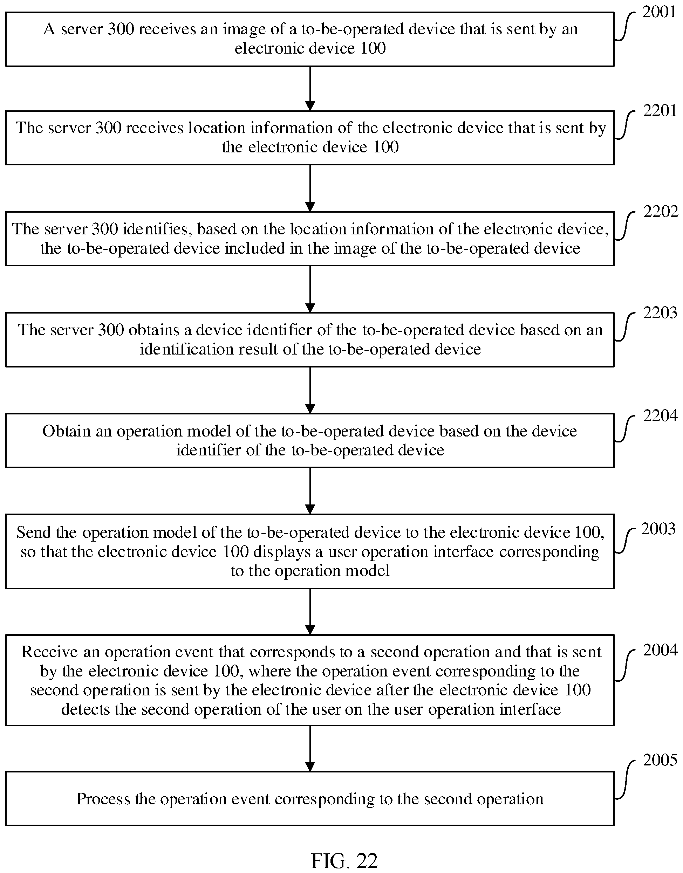

FIG. 22 is a flowchart of a contactless operation method according to still another embodiment of this application. As shown in FIG. 22, in the embodiment shown in FIG. 20 of this application, before step 2002, the method may further include the following steps.

Step 2201: The server 300 receives location information of the electronic device that is sent by the electronic device 100.

The location information includes a longitude, a latitude, and an altitude of a current location of the electronic device.

Specifically, the server 300 may implement the operation of step 2201 through the processor 310 and the communications interface 350.

In this case, step 2002 may include the following steps:

Step 2202: The server 300 identifies, based on the location information of the electronic device, the to-be-operated device included in the image of the to-be-operated device.

In a possible implementation, the to-be-operated device may be a vending machine. In this case, the identifying the to-be-operated device included in the image of the to-be-operated device may be: The server 300 determines a commodity placement area of the vending machine from the image, and then crops an image of the commodity placement area from the image; or reduces a recognition weight of an image of the commodity placement area.

During specific implementation, for a same vending machine, a commodity placement location may be adjusted at different times, some commodities may be sold out, or the like, resulting in a decrease in recognition accuracy. Therefore, when the image of the vending machine is recognized, the image of the commodity placement area needs to be cropped, or the recognition weight of the image of the commodity placement area needs to be reduced, to improve image recognition accuracy.

In this implementation, before receiving the operation event that corresponds to the second operation and that is sent by the electronic device 100, that is, before step 2004, the server 300 may further obtain inventory information of the vending machine based on the device identifier of the vending machine, and then send the inventory information of the vending machine to the electronic device 100.

Specifically, if the target application may be a general-purpose APP having a photographing or scanning function, for example, an AR Engine APP, and the server 300 corresponding to the target application is an AR server, the server 300 may obtain the inventory information of the vending machine from the server corresponding to the vending machine based on the device identifier of the vending machine. If the target application is a vending machine APP or a vending machine applet, and the server 300 corresponding to the target application is the server corresponding to the vending machine, the server 300 may obtain the inventory information of the vending machine from the local database 330 based on a device identifier of the vending machine.

Step 2203: The server 300 obtains the device identifier of the to-be-operated device based on an identification result of the to-be-operated device.

Specifically, the server 300 pre-stores deployment data of the to-be-operated device, where the deployment data includes a deployment location (longitude, latitude, and altitude) of the to-be-operated device, a model number of the to-be-operated device, and an operator to which the to-be-operated device belongs.

That the server 300 identifies, based on the location information of the electronic device, the to-be-operated device included in the image of the to-be-operated device may be: The server 300 obtains, based on the location information of the electronic device and from the pre-stored deployment data of the to-be-operated device, an image model, a model number, and an operator that are of the to-be-operated device deployed at a current location of the user, to narrow down an identification range; and then the server 300 compares the image of the to-be-operated device with the image model, to obtain a model number of the to-be-operated device included in the image and an operator to which the to-be-operated device belongs. In this way, the server 300 may obtain the device identifier of the to-be-operated device from the deployment data based on the model number and the operator to which the to-be-operated device belongs.

Further, after the server 300 identifies, based on the location information of the electronic device, the to-be-operated device included in the image of the to-be-operated device, if the server 300 identifies at least two to-be-operated devices of a same model number at the current location of the user, the server 300 obtains device identifiers of the at least two to-be-operated devices based on the model numbers of the at least two to-be-operated devices and operators to which the at least two to-be-operated devices belong; the server 300 sends the device identifiers of the at least two to-be-operated devices to the electronic device 100, so that the electronic device 100 displays the device identifiers of the at least two to-be-operated devices to the user; and then the server 300 receives a device identifier of the to-be-operated device that is selected by the user and that is sent by the electronic device 100, and sends, to the electronic device 100, an operation model corresponding to the device identifier selected by the user.

Step 2204: Obtain an operation model of the to-be-operated device based on the device identifier of the to-be-operated device.

It may be understood that some or all of the steps or operations in the foregoing embodiments are merely examples. In embodiments of this application, other operations or variations of various operations may be further performed. In addition, the steps may be performed in a sequence different from that presented in the foregoing embodiments, and not all operations in the foregoing embodiments may need to be performed.

It may be understood that, to implement the foregoing functions, the electronic device includes corresponding hardware and/or software modules for executing the functions. Algorithm steps in the examples described with reference to embodiments disclosed in this application can be implemented by hardware or a combination of hardware and computer software in this application. Whether a function is executed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the electronic device may be divided into functional modules according to the foregoing method embodiments. For example, each functional module may be obtained through division based on each corresponding function, or two or more functions may be integrated into one module. The integrated module may be implemented in a form of hardware. It should be noted that, in embodiments, division into the modules is an example, is merely logical function division, and may be other division during actual implementation.

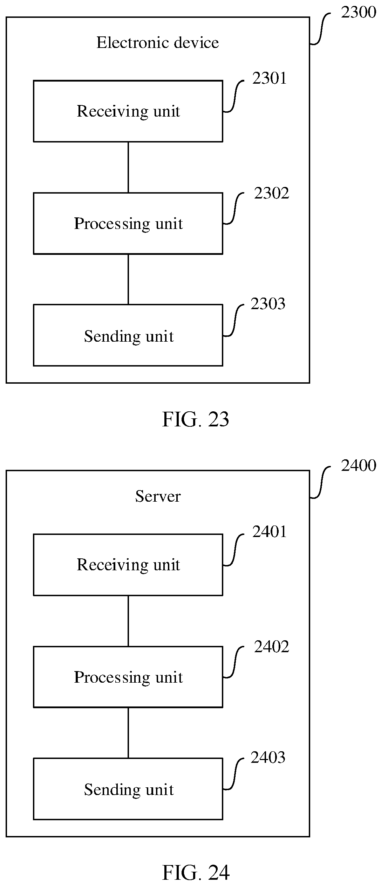

FIG. 23 is a schematic diagram of a structure of an electronic device according to another embodiment of this application. When each functional module is obtained through division based on each corresponding function,

FIG. 23 is a schematic diagram of a possible composition of an electronic device 2300 in the foregoing embodiment. As shown in FIG. 23, the electronic device 2300 may include: a receiving unit 2301, a processing unit 2302, and a sending unit 2303.

The receiving unit 2301 may be configured to support the electronic device 2300 in performing step 1704, step 1803, step 1807, step 1901, and the like, and/or may be used in another process of the technical solutions described in embodiments of this application.

The processing unit 2302 may be configured to support the electronic device 2300 in performing step 1701, step 1702, step 1705, step 1706, step 1801, step 1804, step 1805, step 1902, step 1903, and the like, and/or may be used in another process of the technical solutions described in embodiments of this application.

The sending unit 2303 may be configured to support the electronic device 2300 in performing step 1703, step 1706, step 1802, step 1806, step 1904, and the like, and/or may be used in another process of the technical solutions described in embodiments of this application.

It should be noted that all related content of the steps in the foregoing method embodiments may be cited in function description of corresponding functional modules. Details are not described herein again.

The electronic device 2300 provided in this embodiment is configured to perform the foregoing contactless operation method, and therefore can achieve the same effect as the foregoing method.

It should be understood that the electronic device 2300 may correspond to the electronic device 100 shown in FIG. 1. Functions of the receiving unit 2301 and the sending unit 2303 may be implemented by the processor 110, the antenna 1, and the mobile communications module 150 in the electronic device 100 shown in FIG. 1, and/or may be implemented by the processor 110, the antenna 2, and the wireless communications module 160. A function of the processing unit 2302 may be implemented by the processor 110, the touch sensor 180K, and the display 194 in the electronic device 100 shown in FIG. 1.

When an integrated unit is used, the electronic device 2300 may include a processing module, a storage module, and a communications module.

The processing module may be configured to control and manage an action of the electronic device 2300, for example, may be configured to support the electronic device 2300 in performing the steps performed by the receiving unit 2301, the processing unit 2302, and the sending unit 2303. The storage module may be configured to support the electronic device 2300 in storing program code, data, and the like. The communications module may be configured to support communication between the electronic device 2300 and another device.

The processing module may be a processor or a controller, and may implement or execute various example logic blocks, modules, and circuits described with reference to content disclosed in this application. The processor may be alternatively a combination for implementing a computing function, for example, a combination including one or more microprocessors or a combination of a digital signal processor (digital signal processing, DSP) and a microprocessor. The storage module may be a memory. The communications module may be specifically a device, for example, a radio frequency circuit, a Bluetooth chip, and/or a Wi-Fi chip, that interacts with another electronic device.

In an embodiment, when the processing module is a processor and the storage module is a memory, the electronic device 2300 in this embodiment may be a device having the structure shown in FIG. 1.

Similarly, it may be understood that, to implement the foregoing functions, the server includes corresponding hardware and/or software modules for executing the functions. Algorithm steps in the examples described with reference to embodiments disclosed in this application can be implemented by hardware or a combination of hardware and computer software in this application. Whether a function is executed by hardware or hardware driven by computer software depends on particular applications and design constraints of the technical solutions. A person skilled in the art may use different methods to implement the described functions for each particular application with reference to embodiments, but it should not be considered that the implementation goes beyond the scope of this application.

In this embodiment, the server may be divided into functional modules according to the foregoing method embodiments. For example, each functional module may be obtained through division based on each corresponding function, or two or more functions may be integrated into one module. The integrated module may be implemented in a form of hardware. It should be noted that, in embodiments, division into the modules is an example, is merely logical function division, and may be other division during actual implementation.

FIG. 24 is a schematic diagram of a structure of a server according to another embodiment of this application. When each functional module is obtained through division based on each corresponding function, FIG. 24 is a schematic diagram of a possible composition of a server 2400 in the foregoing embodiment. As shown in FIG. 24, the server 2400 may include: a receiving unit 2401, a processing unit 2402, and a sending unit 2403.

The receiving unit 2401 may be configured to support the server 2400 in performing step 2001, step 2004, step 2201, and the like, and/or may be used in another process of the technical solutions described in embodiments of this application.

The processing unit 2402 may be configured to support the server 2400 in performing step 2002, step 2005, step 2101, step 2102, step 2202, step 2203, step 2204, and the like, and/or may be used in another process of the technical solutions described in embodiments of this application.

The receiving unit 2403 may be configured to support the server 2400 in performing step 2003, and the like, and/or may be used in another process of the technical solutions described in embodiments of this application.

It should be noted that all related content of the steps in the foregoing method embodiments may be cited in function description of corresponding functional modules. Details are not described herein again.

The server 2400 provided in this embodiment is configured to perform the foregoing contactless operation method, and therefore can achieve the same effect as the foregoing method.

It should be understood that the server 2400 may correspond to the server 300 shown in FIG. 3. Functions of the receiving unit 2401 and the sending unit 2403 may be implemented by the processor 310 and the communications interface 350 in the server 300 shown in FIG. 3. A function of the processing unit 2402 may be implemented by the processor 310 in the server 300 shown in FIG. 3.

When an integrated unit is used, the server 2400 may include a processing module, a storage module, and a communications module.

The processing module may be configured to control and manage an action of the server 2400, for example, may be configured to support the server 2400 in performing the steps performed by the receiving unit 2401, the processing unit 2402, and the sending unit 2403. The storage module may be configured to support the server 2400 in storing program code, data, and the like. The communications module may be configured to support communication between the server 2400 and another device.

The processing module may be a processor or a controller, and may implement or execute various example logic blocks, modules, and circuits described with reference to content disclosed in this application. The processor may be alternatively a combination for implementing a computing function, for example, a combination including one or more microprocessors or a combination of a digital signal processor (digital signal processor, DSP) and a microprocessor. The storage module may be a memory. The communications module may be specifically a device, for example, a radio frequency circuit, a Bluetooth chip, and/or a Wi-Fi chip, that interacts with another electronic device.

In an embodiment, when the processing module is a processor, and the storage module is a memory, the server 2400 in this embodiment may be a device having the structure shown in FIG. 3.

An embodiment of this application further provides a computer-readable storage medium. The computer-readable storage medium stores a computer program. When the computer program is run on a computer, the computer is enabled to perform the method provided in the embodiments shown in FIG. 17 to FIG. 19 in this application.

An embodiment of this application further provides a computer-readable storage medium. The computer-readable storage medium stores a computer program. When the computer program is run on a computer, the computer is enabled to perform the method provided in the embodiments shown in FIG. 20 to FIG. 22 in this application.

An embodiment of this application further provides a computer program product. The computer program product includes a computer program. When the computer program is run on a computer, the computer is enabled to perform the method provided in the embodiments shown in FIG. 17 to FIG. 19 in this application.

An embodiment of this application further provides a computer program product. The computer program product includes a computer program. When the computer program is run on a computer, the computer is enabled to perform the method provided in the embodiments shown in FIG. 20 to FIG. 22 in this application.

In embodiments of this application, "at least one" means one or more, and "a plurality of' means two or more. A term "and/or" describes an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items" and a similar expression thereof refer to any combination of these items, including any combination of singular items or plural items. For example, at least one item of a, b, or c may indicate a, b, c, a and b, a and c, b and c, or a, b, and c, where a, b, and c may be singular or plural.

A person of ordinary skill in the art may be aware that, with reference to embodiments disclosed in this specification, described units and algorithm steps may be implemented by electronic hardware or a combination of computer software and electronic hardware. Whether the functions are executed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In embodiments of this application, when any of the functions is implemented in a form of a software function unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application. Any variation or replacement readily figured out by a person skilled in the art within the technical scope disclosed in this application shall fall within the protection scope of this application. The protection scope of this application shall be subject to the protection scope of the claims.

## Claims

1. A contactless operation method, comprising:
detecting, by an electronic device, a first operation performed by a user on a target application on the electronic device;
obtaining, by the electronic device, an image of a to-be-operated device by using the target application in response to the first operation;
sending, by the electronic device, the image of the to-be-operated device to a server corresponding to the target application;
obtaining, by the server, an operation model of the to-be-operated device based on the image of the to-be-operated device;
sending, by the server, the operation model of the to-be-operated device to the electronic device;
displaying, by the electronic device, a user operation interface corresponding to the operation model;
after detecting a second operation of the user on the user operation interface, sending, by the electronic device in response to the second operation, an operation event corresponding to the second operation to the server; and
processing, by the server, the operation event corresponding to the second operation.

2. The method according to claim 1, wherein the obtaining, by the server, an operation model of the to-be-operated device based on the image of the to-be-operated device comprises:
obtaining, by the server, a device identifier of the to-be-operated device based on the image of the to-be-operated device, and obtaining the operation model of the to-be-operated device based on the device identifier of the to-be-operated device.

3. The method according to claim 2, wherein the image of the to-be-operated device comprises electronic information code of the to-be-operated device; and
the obtaining, by the server, a device identifier of the to-be-operated device based on the image of the to-be-operated device comprises:
identifying, by the server, the electronic information code of the to-be-operated device comprised in the image, to obtain the device identifier of the to-be-operated device.

4. The method according to claim 2, wherein after the detecting, by an electronic device used by a user, a first operation performed by the user on a target application, the method further comprises:
obtaining, by the electronic device, location information of the electronic device; and
sending, by the electronic device, the location information of the electronic device to the server corresponding to the target application.

5. The method according to claim 4, wherein the obtaining, by the server, a device identifier of the to-be-operated device based on the image of the to-be-operated device comprises:
identifying, by the server based on the location information of the electronic device, the to-be-operated device comprised in the image of the to-be-operated device; and
obtaining, by the server, the device identifier of the to-be-operated device based on an identification result of the to-be-operated device.

6. A contactless operation method, comprising:
detecting, by an electronic device, a first operation performed by a user on a target application on the electronic device;
obtaining an image of a to-be-operated device by using the target application in response to the first operation;
sending the image of the to-be-operated device to a server corresponding to the target application;
receiving an operation model of the to-be-operated device that is sent by the server, wherein the operation model of the to-be-operated device is obtained by the server based on the image of the to-be-operated device;
displaying a user operation interface corresponding to the operation model; and
after detecting a second operation of the user on the user operation interface, sending, in response to the second operation, an operation event corresponding to the second operation to the server, so that the server processes the operation event corresponding to the second operation.

7. The method according to claim 6, wherein the obtaining an image of a to-be-operated device by using the target application comprises:
invoking a camera in the electronic device by using the target application to photograph the to-be-operated device, to obtain the image of the to-be-operated device; or
invoking a camera in the electronic device by using the target application to scan the to-be-operated device, to obtain an image visual sparse point cloud of the to-be-operated device.

8. The method according to claim 6, wherein after the detecting, by an electronic device, a first operation performed by a user on a target application on the electronic device, the method further comprises:
obtaining, by the electronic device, location information of the electronic device; and
sending, by the electronic device, the location information of the electronic device to the server corresponding to the target application, so that the server identifies the to-be-operated device comprised in the image of the to-be-operated device, and obtains the operation model of the to-be-operated device based on an identification result of the to-be-operated device and the location information of the electronic device.

9. The method according to claim 8, wherein before the receiving an operation model of the to-be-operated device that is sent by the server, the method further comprises:
receiving device identifiers of at least two to-be-operated devices that are sent by the server;
displaying the device identifiers of the at least two to-be-operated devices;
obtaining a device identifier selected by the user; and
sending, to the server, the device identifier selected by the user; and
the receiving an operation model of the to-be-operated device that is sent by the server comprises:
receiving an operation model that corresponds to the device identifier selected by the user and that is sent by the server.

10. The method according to any one of claims 6 to 9, wherein the to-be-operated device comprises a vending machine, and before the displaying a user operation interface corresponding to the operation model, the method further comprises:
receiving, by the electronic device, inventory information of the vending machine that is sent by the server; and
the displaying a user operation interface corresponding to the operation model comprises:
displaying the user operation interface corresponding to the operation model, wherein the user operation interface comprises the inventory information of the vending machine.

11. The method according to claim 10, wherein the detecting a second operation of the user on the user operation interface comprises:
detecting the second operation of the user for selecting and purchasing a commodity on the user operation interface; and
the sending, in response to the second operation, an operation event corresponding to the second operation to the server comprises:
submitting, to the server in response to the second operation, an order of the user for purchasing the selected commodity, wherein the order comprises information about a payment channel selected by the user.

12. A contactless operation method, comprising:
receiving, by a server, an image of a to-be-operated device that is sent by an electronic device, wherein the server is a server corresponding to a target application, and the image of the to-be-operated device is obtained by using the target application after the electronic device detects a first operation performed by a user using the electronic device on the target application;
obtaining an operation model of the to-be-operated device based on the image of the to-be-operated device;
sending the operation model of the to-be-operated device to the electronic device, so that the electronic device displays a user operation interface corresponding to the operation model;
receiving an operation event that corresponds to a second operation and that is sent by the electronic device, wherein the operation event corresponding to the second operation is sent by the electronic device after the electronic device detects the second operation of the user on the user operation interface; and
processing the operation event corresponding to the second operation.

13. The method according to claim 12, wherein the obtaining an operation model of the to-be-operated device based on the image of the to-be-operated device comprises:
obtaining a device identifier of the to-be-operated device based on the image of the to-be-operated device, and obtaining the operation model of the to-be-operated device based on the device identifier of the to-be-operated device.

14. The method according to claim 13, wherein the image of the to-be-operated device comprises electronic information code of the to-be-operated device; and
the obtaining a device identifier of the to-be-operated device based on the image of the to-be-operated device comprises:
identifying the electronic information code of the to-be-operated device comprised in the image, to obtain the device identifier of the to-be-operated device.

15. The method according to claim 13, wherein before the obtaining a device identifier of the to-be-operated device based on the image of the to-be-operated device, the method further comprises:
receiving location information of the electronic device that is sent by the electronic device; and
the obtaining a device identifier of the to-be-operated device based on the image of the to-be-operated device comprises:
identifying, based on the location information of the electronic device, the to-be-operated device comprised in the image of the to-be-operated device; and
obtaining the device identifier of the to-be-operated device based on an identification result of the to-be-operated device.

16. The method according to claim 15, wherein the identifying, based on the location information of the electronic device, the to-be-operated device comprised in the image of the to-be-operated device comprises:
obtaining, based on the location information of the electronic device and from pre-stored deployment data of the to-be-operated device, an image model, a model number, and an operator that are of the to-be-operated device deployed at a current location of the electronic device; and
comparing the image of the to-be-operated device with the image model, to obtain a model number of the to-be-operated device comprised in the image and an operator to which the to-be-operated device belongs; and
the obtaining the device identifier of the to-be-operated device based on an identification result of the to-be-operated device comprises:
obtaining the device identifier of the to-be-operated device from the deployment data based on the model number and the operator to which the to-be-operated device belongs.

17. The method according to claim 16, wherein after the identifying, based on the location information of the electronic device, the to-be-operated device comprised in the image of the to-be-operated device, the method further comprises:
if at least two to-be-operated devices of a same model number are identified at the current location of the electronic device, obtaining device identifiers of the at least two to-be-operated devices based on the model numbers of the at least two to-be-operated devices and operators to which the at least two to-be-operated devices belong;
sending the device identifiers of the at least two to-be-operated devices to the electronic device, so that the electronic device displays the device identifiers of the at least two to-be-operated devices to the user;
receiving a device identifier of a to-be-operated device that is selected by the user and that is sent by the electronic device; and
sending, to the electronic device, an operation model corresponding to the device identifier selected by the user.

18. The method according to claim 15, wherein the to-be-operated device comprises a vending machine, and the identifying the to-be-operated device comprised in the image of the to-be-operated device comprises:
determining a commodity placement area of the vending machine from the image; and
cropping an image of the commodity placement area from the image; or reducing a recognition weight of an image of the commodity placement area.

19. The method according to claim 18, wherein before the receiving an operation event that corresponds to a second operation and that is sent by the electronic device, the method further comprises:
obtaining inventory information of the vending machine; and
sending the inventory information of the vending machine to the electronic device.

20. The method according to claim 19, wherein the obtaining inventory information of the vending machine comprises:
obtaining the inventory information of the vending machine from a local database based on a device identifier of the vending machine; or
obtaining, based on a device identifier of the vending machine, the inventory information of the vending machine from a server corresponding to the vending machine.

21. A contactless operation apparatus, configured to perform the method according to any one of claims 6 to 11.

22. A contactless operation apparatus, configured to perform the method according to any one of claims 12 to 20.

23. An electronic device, comprising:
one or more processors, a memory, a plurality of applications, and one or more computer programs, wherein the one or more computer programs are stored in the memory, the one or more computer programs comprise instructions, and when the instructions are executed by the electronic device, the electronic device is enabled to perform the following steps:
detecting a first operation performed by a user on a target application on the electronic device;
obtaining an image of a to-be-operated device by using the target application in response to the first operation;
sending the image of the to-be-operated device to a server corresponding to the target application;
receiving an operation model of the to-be-operated device that is sent by the server, wherein the operation model of the to-be-operated device is obtained by the server based on the image of the to-be-operated device;
displaying a user operation interface corresponding to the operation model; and
after detecting a second operation of the user on the user operation interface, sending, in response to the second operation, an operation event corresponding to the second operation to the server, so that the server processes the operation event corresponding to the second operation.

24. The electronic device according to claim 23, wherein when the instructions are executed by the electronic device, that the electronic device is enabled to perform the step of obtaining an image of a to-be-operated device by using the target application comprises:
invoking a camera in the electronic device by using the target application to photograph the to-be-operated device, to obtain the image of the to-be-operated device; or
invoking a camera in the electronic device by using the target application to scan the to-be-operated device, to obtain an image visual sparse point cloud of the to-be-operated device.

25. The electronic device according to claim 23, wherein when the instructions are executed by the electronic device, after performing the step of detecting a first operation performed by a user on a target application on the electronic device, the electronic device is further enabled to perform the following steps:
obtaining location information of the electronic device; and
sending the location information of the electronic device to the server corresponding to the target application, so that the server identifies the to-be-operated device comprised in the image of the to-be-operated device, and obtains the operation model of the to-be-operated device based on an identification result of the to-be-operated device and the location information of the electronic device.

26. The electronic device according to claim 25, wherein when the instructions are executed by the electronic device, before performing the step of receiving an operation model of the to-be-operated device that is sent by the server, the electronic device is further enabled to perform the following steps:
receiving device identifiers of at least two to-be-operated devices that are sent by the server;
displaying the device identifiers of the at least two to-be-operated devices;
obtaining a device identifier of a to-be-operated device that is selected by the user; and
sending, to the server, the device identifier of the to-be-operated device that is selected by the user; and
when the instructions are executed by the electronic device, that the electronic device is enabled to perform the step of receiving an operation model of the to-be-operated device that is sent by the server comprises:
receiving an operation model that is sent by the server and that corresponds to the device identifier selected by the user.

27. The electronic device according to any one of claims 23 to 26, wherein the to-be-operated device comprises a vending machine; and when the instructions are executed by the electronic device, before performing the step of displaying a user operation interface corresponding to the operation model, the electronic device is further enabled to perform the following steps:
receiving inventory information of the vending machine that is sent by the server; and
that the electronic device performs the step of displaying a user operation interface corresponding to the operation model comprises:
displaying the user operation interface corresponding to the operation model, wherein the user operation interface comprises the inventory information of the vending machine.

28. The electronic device according to claim 27, wherein when the instructions are executed by the electronic device, that the electronic device is enabled to perform the step of detecting a second operation of the user on the user operation interface comprises:
detecting the second operation of the user for selecting and purchasing a commodity on the user operation interface; and
that the electronic device performs the step of sending, in response to the second operation, an operation event corresponding to the second operation to the server comprises:
submitting, to the server in response to the second operation, an order of the user for purchasing the selected commodity, wherein the order comprises information about a payment channel selected by the user.

29. A server, comprising:
one or more processors, a memory, a plurality of applications, and one or more computer programs, wherein the one or more computer programs are stored in the memory, the one or more computer programs comprise instructions, and when the instructions are executed by the server, the server is enabled to perform the following steps:
receiving an image of a to-be-operated device that is sent by an electronic device, wherein the server is a server corresponding to a target application, and the image of the to-be-operated device is obtained by using the target application after the electronic device detects a first operation performed by a user using the electronic device on the target application;
obtaining an operation model of the to-be-operated device based on the image of the to-be-operated device;
sending the operation model of the to-be-operated device to the electronic device, so that the electronic device displays a user operation interface corresponding to the operation model;
receiving an operation event that corresponds to a second operation and that is sent by the electronic device, wherein the operation event corresponding to the second operation is sent by the electronic device after the electronic device detects the second operation of the user on the user operation interface; and
processing the operation event corresponding to the second operation.

30. The server according to claim 29, wherein when the instructions are executed by the server, that the server is enabled to perform the step of obtaining an operation model of the to-be-operated device based on the image of the to-be-operated device comprises:
obtaining a device identifier of the to-be-operated device based on the image of the to-be-operated device, and obtaining the operation model of the to-be-operated device based on the device identifier of the to-be-operated device.

31. The server according to claim 30, wherein the image of the to-be-operated device comprises electronic information code of the to-be-operated device, and when the instructions are executed by the server, that the server is enabled to perform the step of obtaining a device identifier of the to-be-operated device based on the image of the to-be-operated device comprises:
identifying the electronic information code of the to-be-operated device comprised in the image, to obtain the device identifier of the to-be-operated device.

32. The server according to claim 30, wherein when the instructions are executed by the server, before performing the step of obtaining an operation model of the to-be-operated device based on the image of the to-be-operated device, the server is further enabled to perform the following steps:
receiving location information of the electronic device that is sent by the electronic device; and
that the server performs the step of obtaining a device identifier of the to-be-operated device based on the image of the to-be-operated device comprises:
identifying, based on the location information of the electronic device, the to-be-operated device comprised in the image of the to-be-operated device; and
obtaining the device identifier of the to-be-operated device based on an identification result of the to-be-operated device.

33. The server according to claim 32, wherein when the instructions are executed by the server, that the server is enabled to perform the step of identifying, based on the location information of the electronic device, the to-be-operated device comprised in the image of the to-be-operated device comprises:
obtaining, based on the location information of the electronic device and from pre-stored deployment data of the to-be-operated device, an image model, a model number, and an operator that are of the to-be-operated device deployed at a current location of the electronic device; and
comparing the image of the to-be-operated device with the image model, to obtain a model number of the to-be-operated device comprised in the image and an operator to which the to-be-operated device belongs; and
that the server performs the step of obtaining the device identifier of the to-be-operated device based on an identification result of the to-be-operated device comprises:
obtaining the device identifier of the to-be-operated device from the deployment data based on the model number and the operator to which the to-be-operated device belongs.

34. The server according to claim 33, wherein when the instructions are executed by the server, before performing the step of identifying, based on the location information of the electronic device, the to-be-operated device comprised in the image of the to-be-operated device, the server is further enabled to perform the following steps:
if at least two to-be-operated devices of a same model number are identified at the current location of the electronic device, obtaining device identifiers of the at least two to-be-operated devices based on the model numbers of the at least two to-be-operated devices and operators to which the at least two to-be-operated devices belong;
sending the device identifiers of the at least two to-be-operated devices to the electronic device, so that the electronic device displays the device identifiers of the at least two to-be-operated devices to the user;
receiving a device identifier of a to-be-operated device that is selected by the user and that is sent by the electronic device; and
sending, to the electronic device, an operation model corresponding to the device identifier selected by the user.

35. The server according to claim 32, wherein the to-be-operated device comprises a vending machine, and when the instructions are executed by the server, that the server is enabled to perform the step of identifying the to-be-operated device comprised in the image of the to-be-operated device comprises:
determining a commodity placement area of the vending machine from the image; and
cropping an image of the commodity placement area from the image; or reducing a recognition weight of an image of the commodity placement area.

36. The server according to claim 35, wherein when the instructions are executed by the server, before performing the step of receiving an operation event that corresponds to a second operation and that is sent by the electronic device, the server is further enabled to perform the following steps:
obtaining inventory information of the vending machine; and
sending the inventory information of the vending machine to the electronic device.

37. The server according to claim 36, wherein when the instructions are executed by the server, that the server performs the step of obtaining inventory information of the vending machine comprises:
obtaining the inventory information of the vending machine from a local database based on a device identifier of the vending machine; or
obtaining, based on a device identifier of the vending machine, the inventory information of the vending machine from a server corresponding to the vending machine.

38. A computer-readable storage medium, wherein the computer-readable storage medium stores a computer program, and when the computer program is run on a computer, the computer is enabled to perform the method according to any one of claims 6 to 11.

39. A computer-readable storage medium, wherein the computer-readable storage medium stores a computer program, and when the computer program is run on a computer, the computer is enabled to perform the method according to any one of claims 12 to 20.
